# EUROPÄISCHE PATENTSCHRIFT

(11) **EP 1 234 203 B1**
(45) Veröffentlichungstag und Bekanntmachung des Hinweises auf die Patenterteilung: **24.03.2004**
(21) Anmeldenummer: 00993187.4
(22) Anmeldetag: 22.11.2000
(51) Int. Cl.: G02B 6/44

(54) **KASSETTE ZUR AUFNAHME VON LICHTWELLENLEITERN MIT ÜBERLÄNGEN UND LICHTWELLENLEITER-SPLEISSVERBINDUNGEN**
CASSETTE FOR RECEIVING OPTICAL WAVEGUIDES WITH OVERLENGTHS AND FIBER SPLICES
CASSETTE DESTINEE A LOGER DES FIBRES OPTIQUES AYANT DES SURLONGUEURS ET EPISSURES DE FIBRES OPTIQUES

(30) Priorität: 22.11.1999 DE 19956067
(43) Veröffentlichungstag der Anmeldung: 28.08.2002
(73) Patentinhaber: CCS Technology, Inc., Wilmington, DE 19803 (US)
(72) Erfinder: MÜLLER, Thorsten, 58708 Menden (DE)
(74) Vertreter: Sturm, Christoph, Dipl.-Ing.
(86) Internationale Anmeldenummer: PCT/DE2000/004111
(87) Internationale Veröffentlichungsnummer: WO 2001/038917

(56) Entgegenhaltungen:
- EP-A- 0 333 316
- EP-A- 0 872 750
- WO-A-95/07482
- DE-A- 4 438 668
- US-A- 5 206 927
- US-A- 5 781 686

## Beschreibung

Die Erfindung bebrifft eine Kassette zur Aufnahme von Lichtwellenleitern mit Überlängen und Lichtwellenleiter-Spleißverbindungen gemäß dem oberbegriff des Patentanspruchs 1.

Aus EP 0 872 750 - A2 ist eine Kabelmuffe mit einer Haltevorrichtung für Kassetten zur Ablage und Spleißung von Lichtwellenleitern bekannt. Die einzelnen Kassetten sind klappbar an einem Kassettenträger angeordnet, wobei die Kassetten übereinander angeordnet sind und in Arbeitspositionen hochgeklappt werden können. Auf der Kassettengrundplatte befinden sich zwei kreisförmige Führungselemente mit Rückhaltestegen, so daß sichergestellt ist, daß eingelegte Lichtwellenleiter nicht aus ihrer Lage herausspringen können. Die dort gezegten Kassetten offenbaren alle Merkmale des Oberbegriffs des Anspruchs 1.

Aus DE 44 38 668 - A1 ist eine Kassette zum Ablegen von Lichtwellenleiterüberlängen und Lichtwellenleiterspleißverbindungen bekannt, die aus einem Basismodul oder aus mehreren Basismodulen besteht. Diese Basismodule haben jeweils gleichen Grundaufbau und können mit Hilfe von Verbindungselementen je nach Bedarf zusammengesetzt werden. Auch hier sind kreisförmige Führungselemente für die Lichtwellenleiter vorgesehen.

Aus WO 95/07482 ist weiterhin eine Kassette zur Aufnahme von Lichtwellenleitern mit Überlängen bekannt, wobei die Lichtwellenleiter in nutenförmigen Eingängen ein- bzw. ausgeführt werden. Die Überlängen können dabei um etwa kreisförmige Führungselemente herumgelegt werden. Rückhaltestege verhindern auch hier ein Herausspringen der eingelegten Lichtwellenleiter.

Weiteren Stand der Technik ist aus US-A-5 206 927, US-A-5 781 686 und EP-A-0 333 316 bekannt.

Aufgabe der Erfindung ist nun, eine Kassette zur Aufnahme von Lichtwellenleitern mit Überlängen zu schaffen, die möglichst universell für die verschiedensten Verwendungszwecke bezüglich der Anordnung selbst, bezüglich der Vielfalt von Einführungen der verschiedenartigsten Lichtwellenleitertypen und bezüglich der Zugänglichkeit verwendbar und optimiert ist.

Die gestellte Aufgabe wird gemäß der Erfindung mit einer Kassette der eingangs erläuterten Art dadurch gelöst, daß die Kassette durch die Merkmale des Kennzeichnenden Teils des Anspruchs 1 weiter gebildet ist.

Ein großer Vorteil an dem Kassettenaufbau gemäß der Erfindung gegenüber dem Stand der Technik ist darin zu sehen, daß diese Kassette für die Aufnahme verschiedenster Lichtwellenleiterausführungen wie Einzelfasern, Bändchen oder Bündeladern oder Lichtwellenleiterabschlüssen, wie Lichtwellenleiterstecker, insbesondere sog. Pigtails - das sind Lichtwellenleiterenden mit fest angebrachten Steckern - verwendet werden kann. Ein weiterer Vorteil ist, daß durch zwei kreisförmige Führungselemente, durch die jeweils die zulässigen Mindestradien der Lichtwellenleiter eingehalten werden, und durch ein dazwischen liegendes Kreuzführungselement eine einwandfreie Führung der eingelegten Lichtwellenleiter gewährleistet ist, wobei durch die Möglichkeit einer 8-förmigen Führung jeder Aus- bzw. Einführungspunkt der Kassette erreicht werden kann. Bei der Einführung von Lichtwellenleitern mit Steckerabschluß (Pigtail) kann ein Aufnahmeadapter vor den Eingängen der Kassettengrundplatte eingesetzt sein oder werden, auf dem sich Anordnungen zur Aufnahme der Stecker befinden. Ebenfalls auf dieser Eingangsseite kann dort ein vertikales Schwenkelement angesetzt sein oder werden, mit dem die Möglichkeit besteht, die Kassettengrundplatte aus einer vertikalen Lage seitlich abzuklappen. Mit einem entsprechenden stufenförmig ausgebildeten Halter für vertikales Schwenken kann erreicht werden, daß nebeneinander angeordnete Kassettengrundplatten durch seitliches Abschwenken zugänglich sind, ohne daß sie aus dem Kassettenverband herausgenommen werden müssen.

Ein weiterer Vorteil liegt darin, daß auf der Kassettengrundplatte die Möglichkeit besteht, daß durch entsprechende Vorrichtungen und Installationen in Form von Spleißhaltern alle möglichen Arten von Lichtwellenleiter-Spleißschutzformen fixiert werden können. Außerdem sind in den Innenräumen der kreisförmigen Führungselemente Zusatzelemente eingerastet oder durch Bruchstege fixiert, die je nach Verwendungszweck und Bedarf herausgenommen oder herausgebrochen werden können. Mit Hilfe dieser Zusatzelemente können z.B. Kassettengrundplatten zu Stapeln zusammengesetzt werden, wobei der Zugang zu jeder einzelnen Kassettengrundplatte erhalten bleibt. Hierzu werden z.B. Scharnierteile und Verschlußklammern benötigt. Außerdem sind in den Innenräumen der Führungselemente in der gleichen Weise Aufnahmen für Lichtwellenleiterbändchen oder Lichtwellenleitereinzelfasern fixiert, die nach der Entnahme in die jeweiligen Bereiche der Einführungen auf der Kassettengrundplatte eingesetzt werden können. Schließlich sind bei diesem Ausführungsbeispiel als Zusatzelemente noch spezielle Befestigungselemente vorhanden, mit denen die Kassettengrundplatte an der Außenseite entweder auf der Schmalseite oder auf der rückwärtigen Plattenseite bestückt werden kann. Mit Hilfe dieser Befestigungselemente läßt sich dann diese Kassettengrundplatte auch an entsprechenden Gegenelementen am Gestell oder dergleichen einhängen und befestigen.

Weiterhin ist im Mittelbereich in der Kassettengrundplatte auf der längsseitigen Schwenkseite ein Kassettenübergang vorgesehen, durch den Lichtwellenleiter von einer Kassette zu einer parallelen Kassette weitergeführt werden können.

Im folgenden wird nun die Erfindung anhand eines Ausführungsbeispiels in 28 Figuren näher erläutert.
- Figur 1: zeigt die geschlossene Kassettengrundplatte mit einem vertikalen Schwenkelement.
- Figur 2: zeigt die geöffnete Kassettengrundplatte mit einem Aufnahmeadapter für Lichtwellenleiter mit Steckerabschlüssen.
- Figur 3: zeigt die geöffnete Kassettengrundplatte mit einem vertikalen Schwenkelement.
- Figur 4: zeigt das vertikale Schwenkelement.
- Figur 5: zeigt einen Halter für die Aufnahme der vertikalen Schwenkelemente.
- Figur 6: zeigt eine vertikale Anordnung von mehreren Kassettengrundplatten.
- Figur 7: zeigt den Aufnahmehalter für Lichtwellenleiterstekker.
- Figur 8: zeigt ein Detail des Aufnahmeadapters für die Einführung von Steckern mit großem Durchmesser.

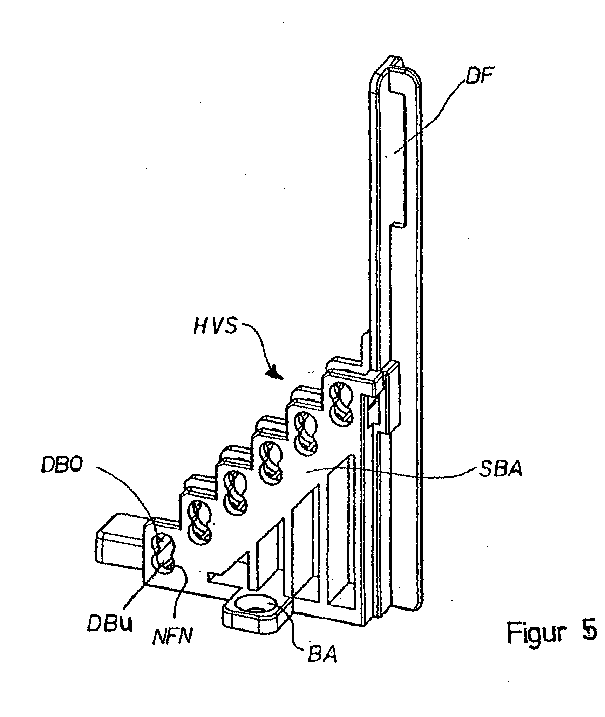

- Figur 5: zeigt ein Detail des Aufnahmeadapters für die Einführung von Steckern mit kleinem Durchmesser.

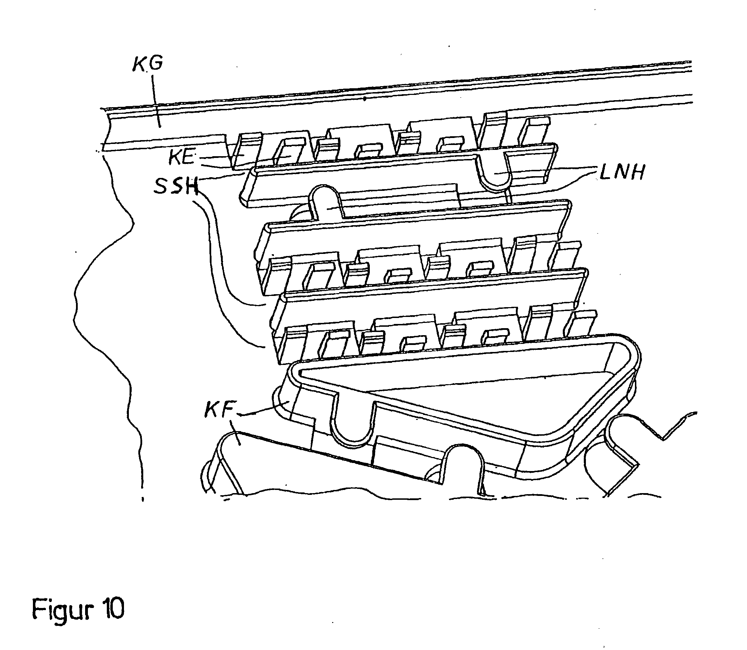

- Figur 10: zeigt die Anordnung von Spleißschutzhaltern für Schrumpfschlauchspleiße.

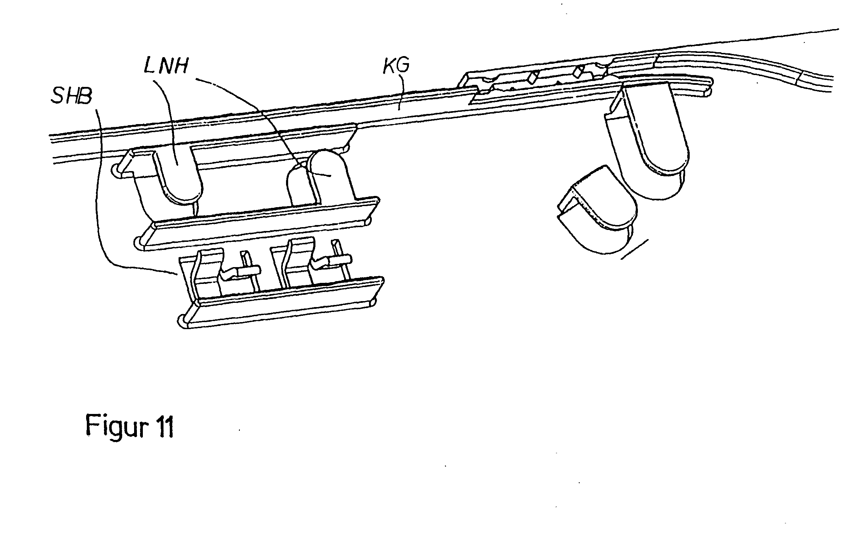

- Figur 11: zeigt die Anordnung von Spleißhaltern für Lichtwellenleiterbändchen.

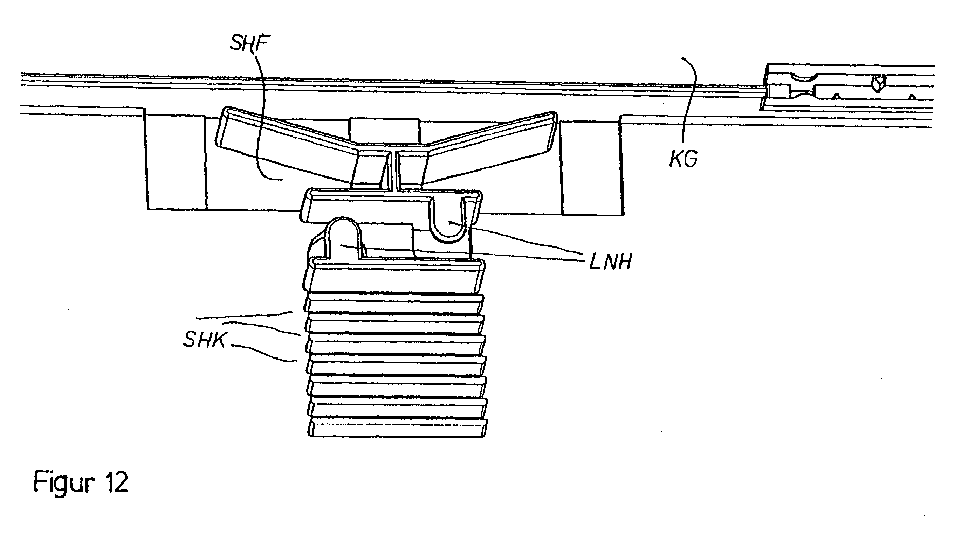

- Figur 12: zeigt die Anordnung von Spleißhaltern für Krimpspleiße und Fiberlok.

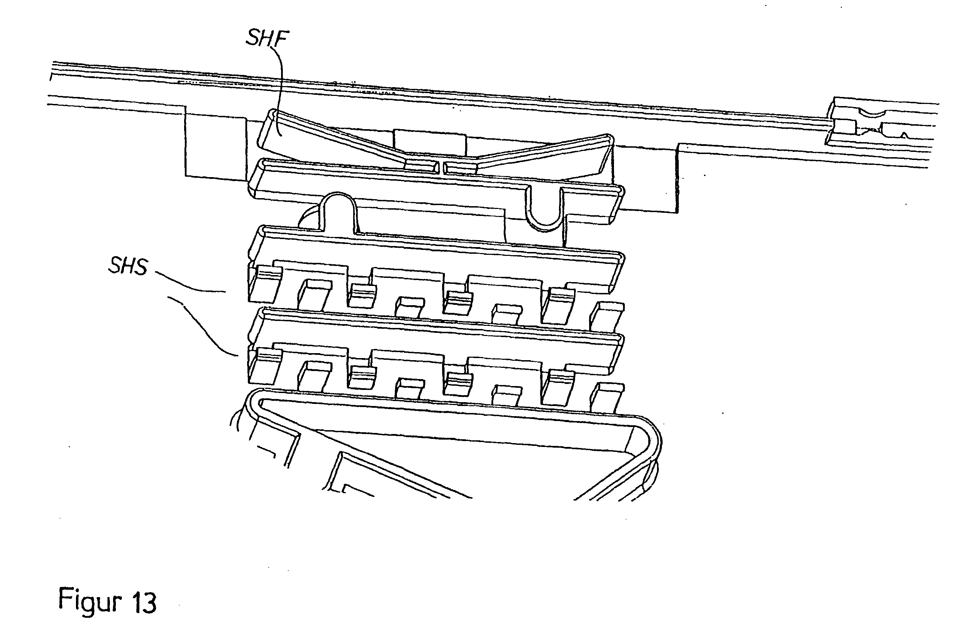

- Figur 13: zeigt eine Anordnung von Spleißschutzhaltern für Schrumpfschlauchspleiße und Fiberlok.

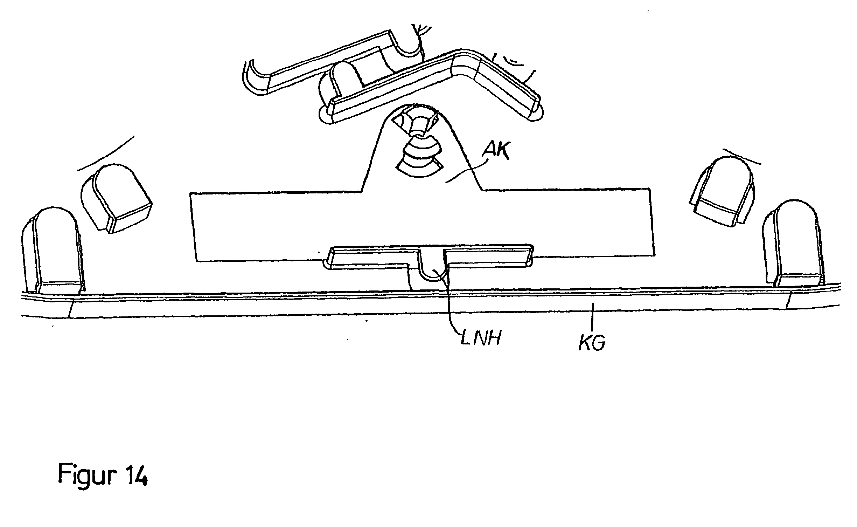

- Figur 14: zeigt eine Aufnahme für Lichtwellenleiterkoppler.

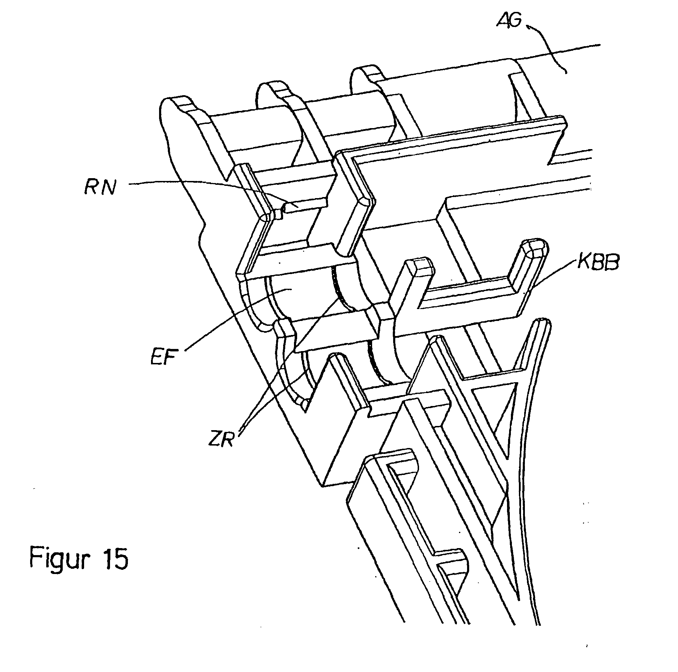

- Figur 15: zeigt einen Eingangs- bzw. Ausgangsbereich der Kassettengrundplatte.

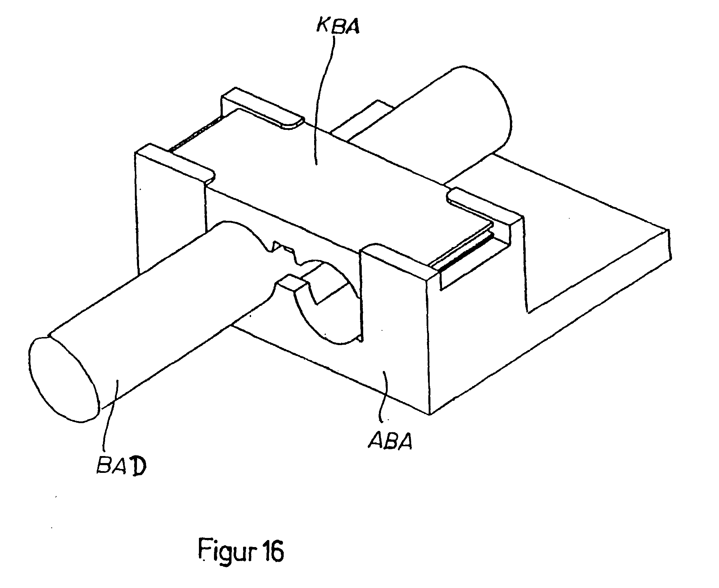

- Figur 16: zeigt eine Aufnahme für Bündeladern.

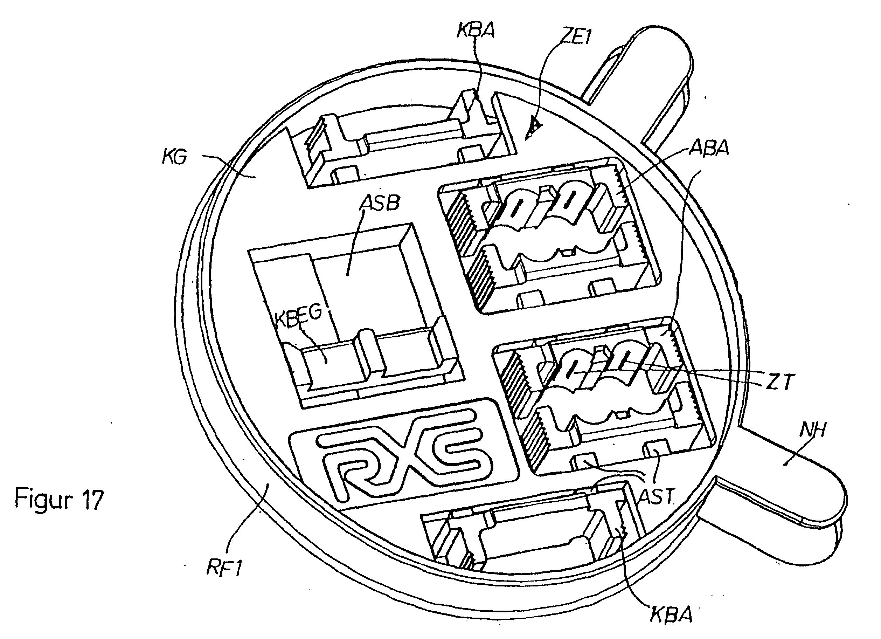

- Figur 17: zeigt Zusatzelemente innerhalb eines kreisförmigen Führungselementes.

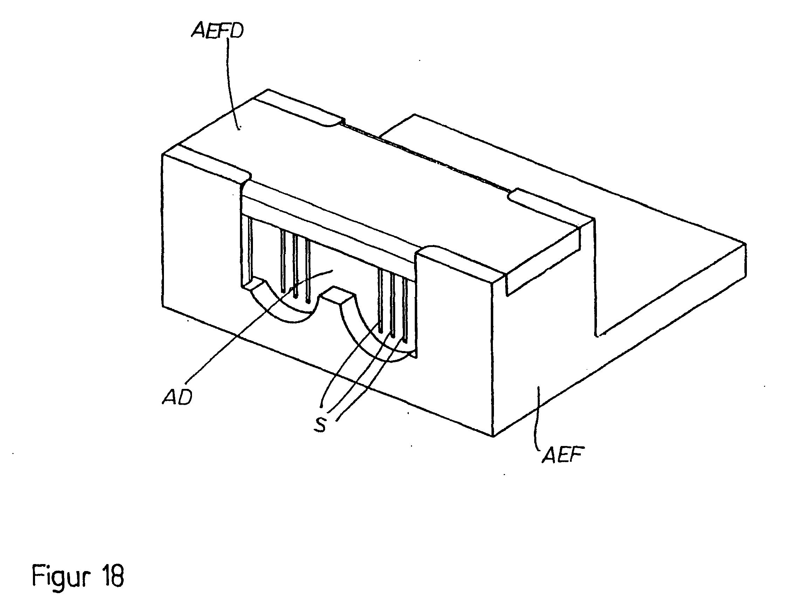

- Figur 18: zeigt eine Aufnahme für Einzeladern.

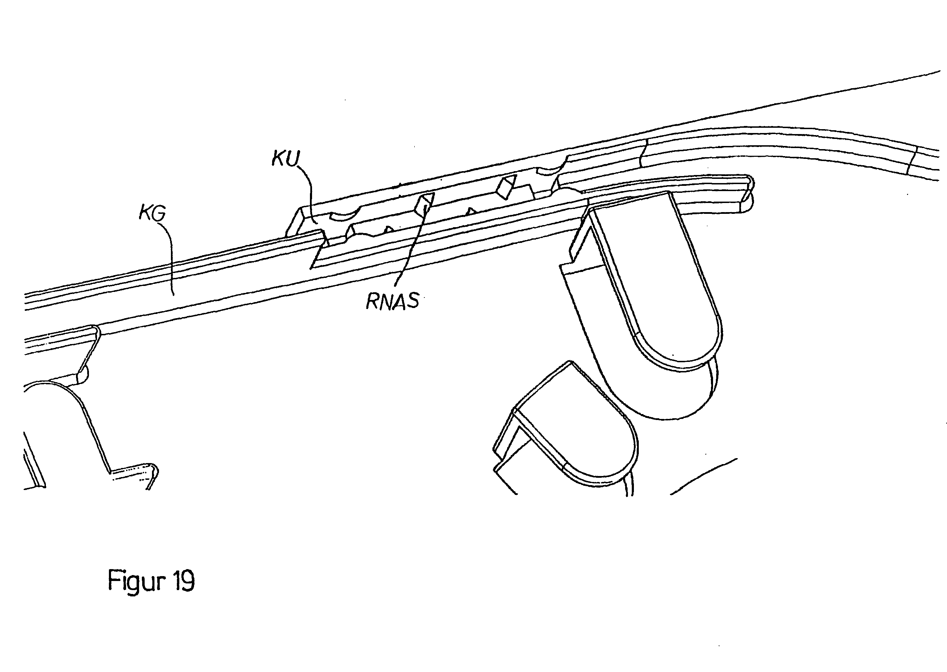

- Figur 19: zeigt einen Kassettenübergang.

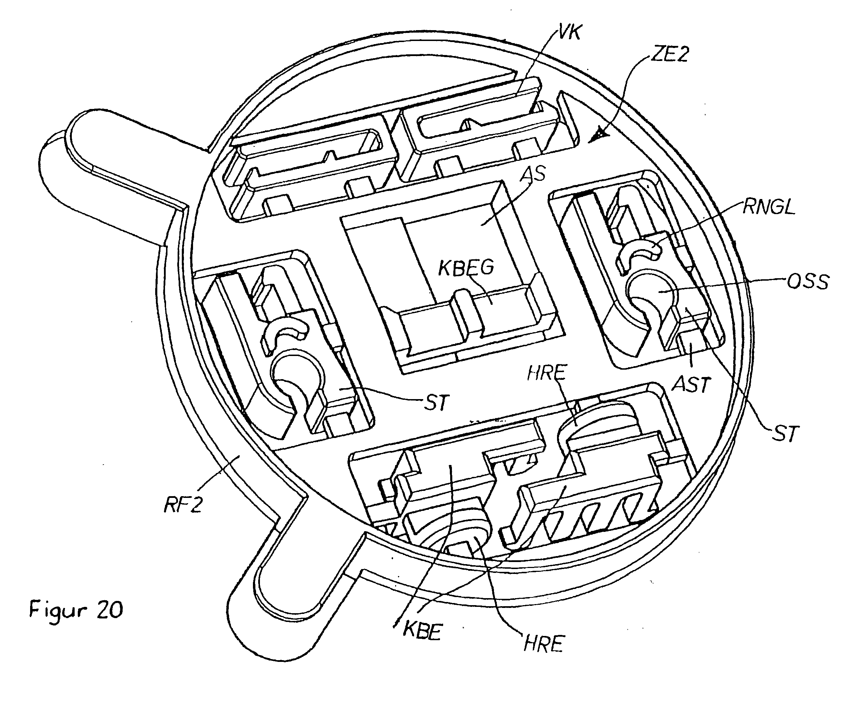

- Figur 20: zeigt weitere Zusatzelemente innerhalb eines kreisförmigen Führungselementes.

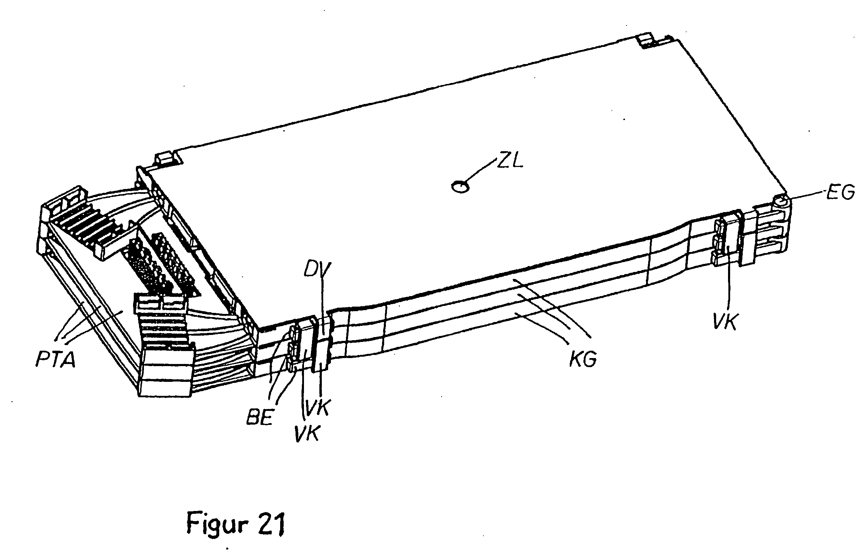

- Figur 21: zeigt einen Stapel von Kassettengrunplatten mit Aufnahmeadaptern.

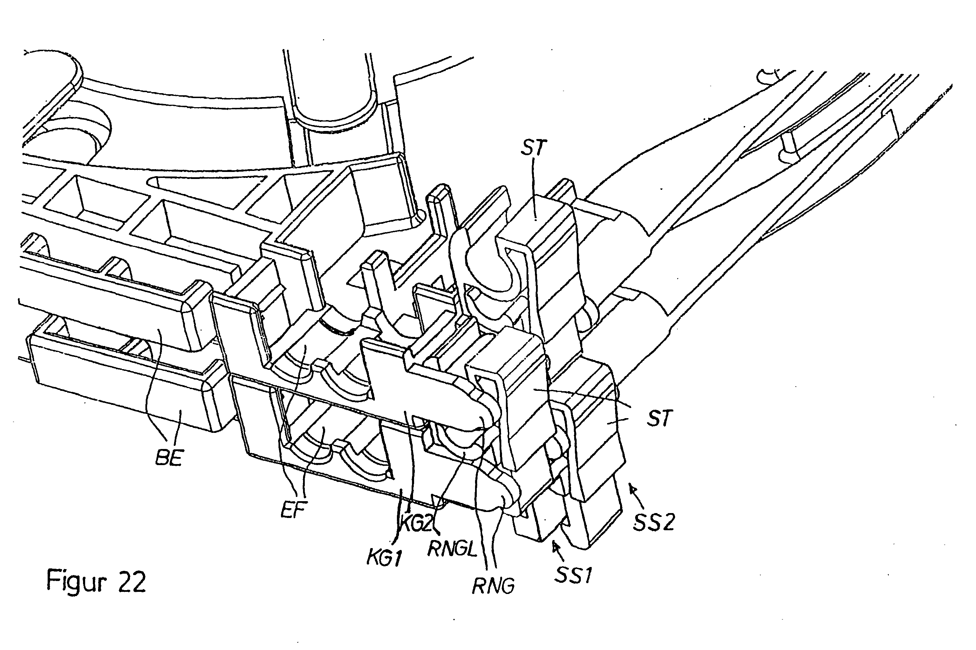

- Figur 22: zeigt die stirnseitige Stapelanordnung nach Figur 21.

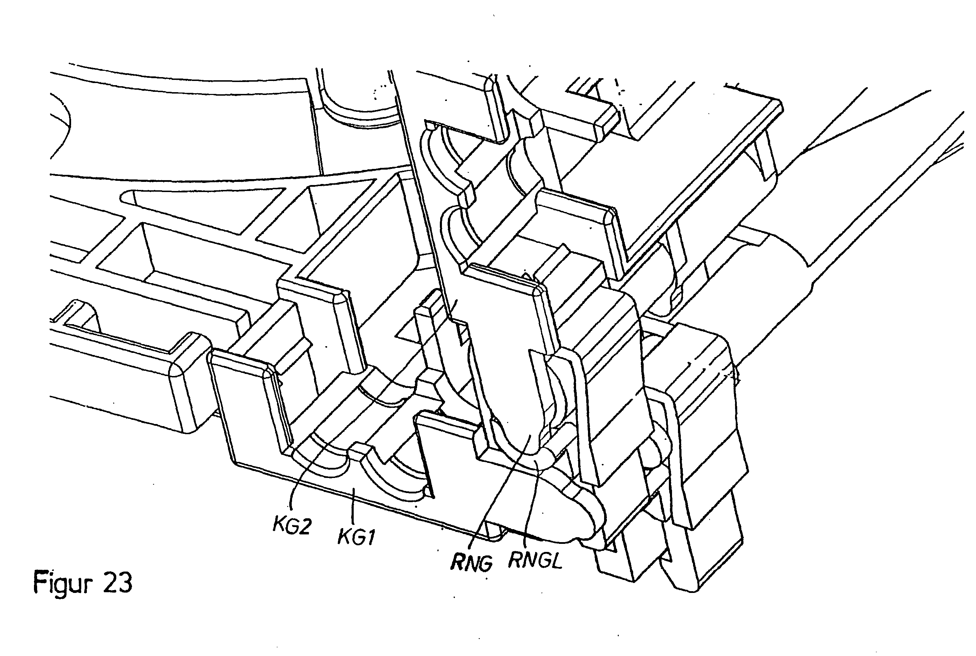

- Figur 23: zeigt die Anordnung nach Figur 22 mit einer aufgestellten Kassettengrundplatte.

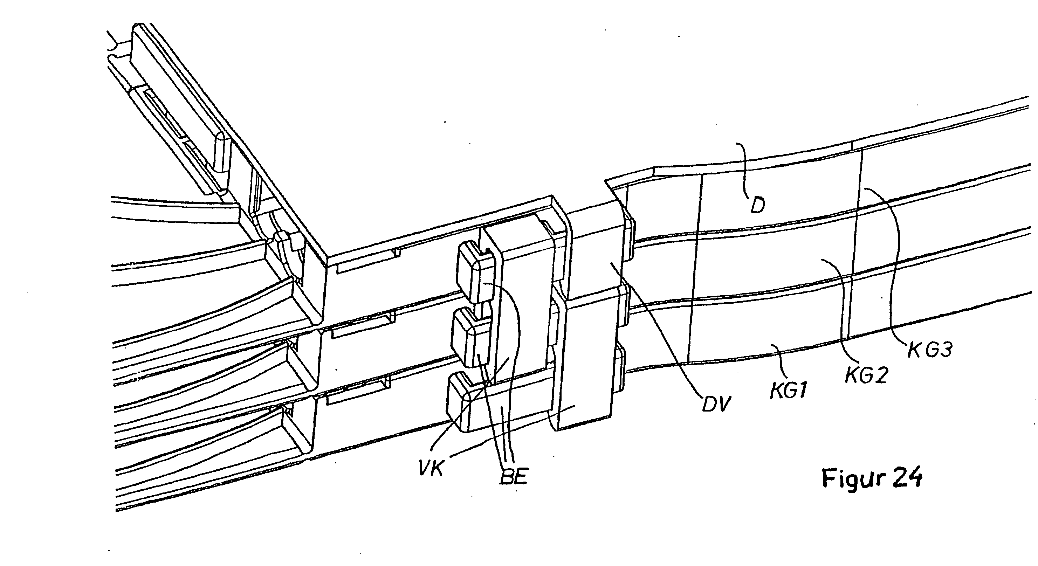

- Figur 24: zeigt die Verriegelungsseite der Anordnung nach Figur 21.

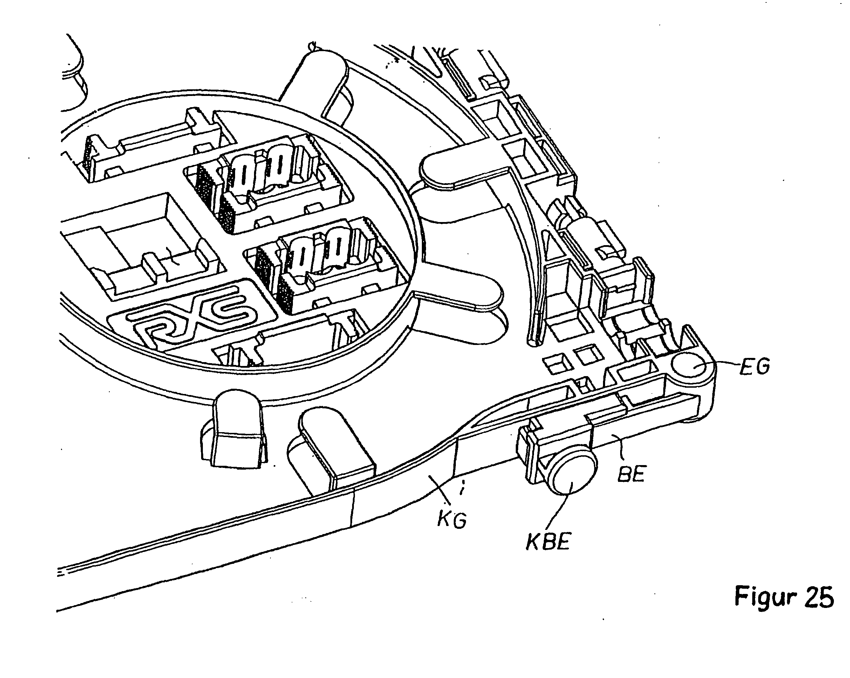

- Figur 25: zeigt den Einsatz eines Befestigungselementes auf der Schmalseite der Kassettengrundplatte.

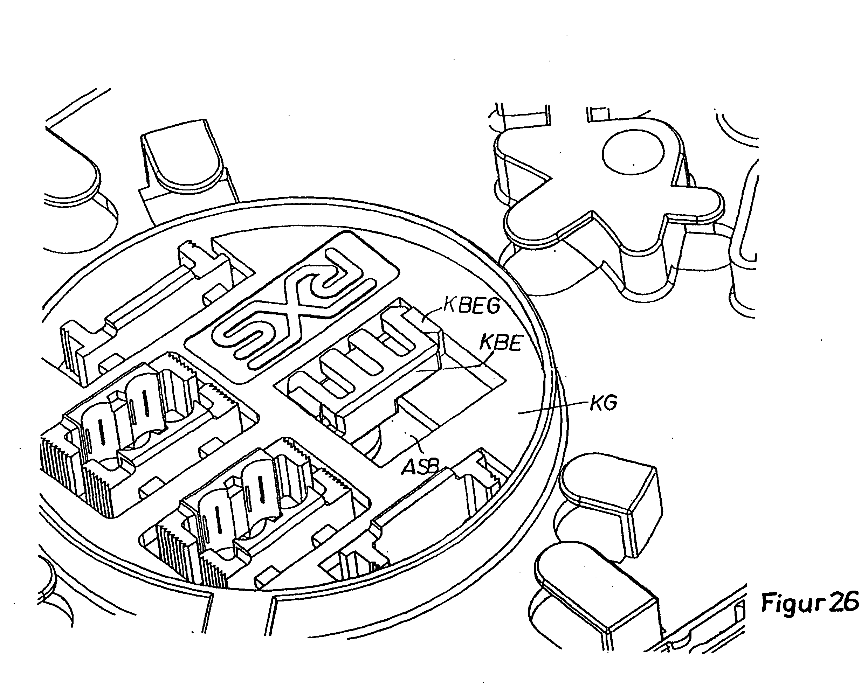

- Figur 26: zeigt als Zusatzelemente die Aufnahmen für die Einführungen und den Einsatz eines Befestigungselementes auf der Unterseite der Kassettengrundseite.

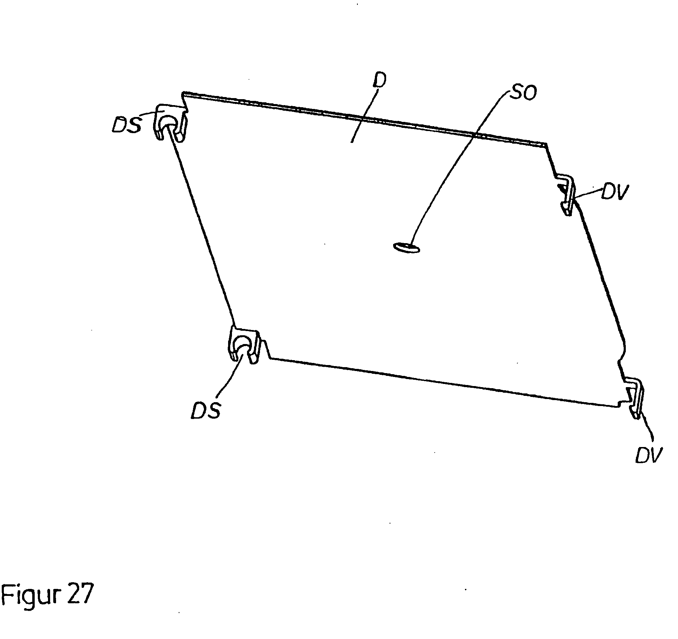

- Figur 27: zeigt die Ausführung eines Deckels für die Kassettengrundplatte.

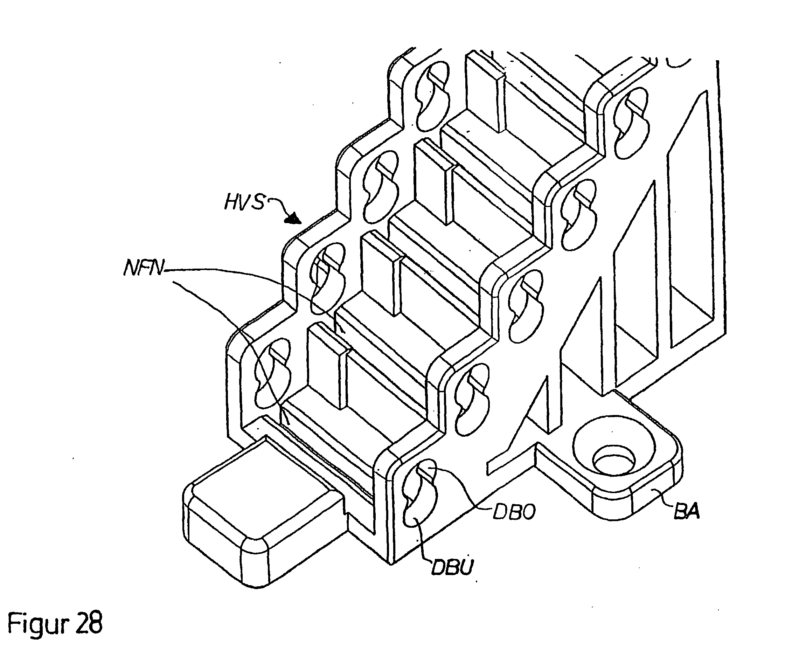

- Figur 28: zeigt Details des Halters für vertikale Schwenkelemente.

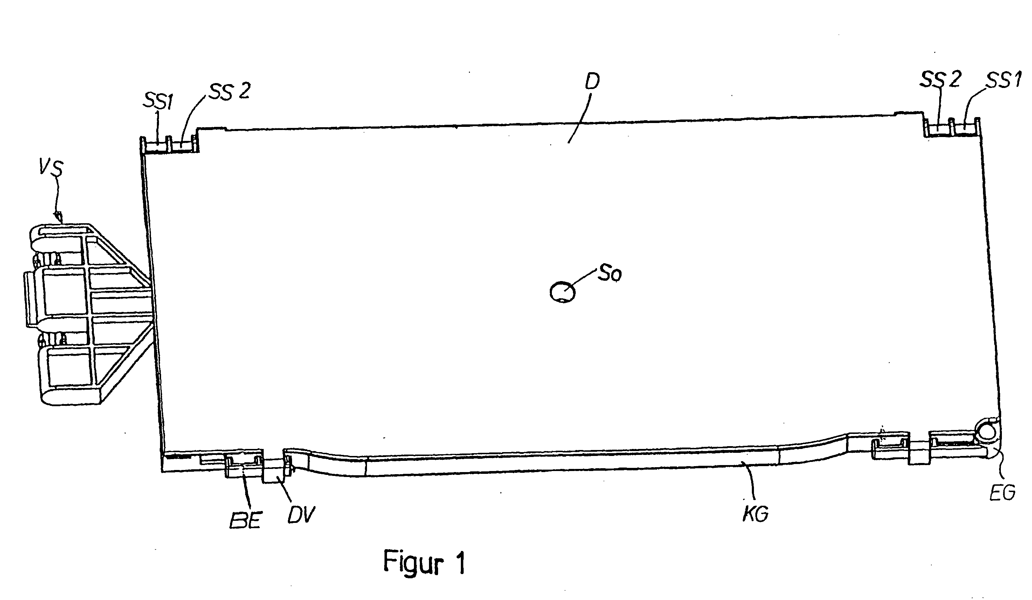

In Figur 1 ist eine mit Deckel D abgeschlossene Kassettengrundplatte KG dargestellt, bei der an der einen Schmalseite ein vertikales Schwenkelement VS angesetzt ist. An der längsseitigen Klappseite der Kassettengrundplatte KG sind Scharnierachsen SS1 und SS2 angeordnet, in die Zusatzelemente für das Aufeinanderstapeln von Kassettengrundplatten KG eingeklippt werden können, wie später noch erläutert wird. An der gegenseitigen Schmalseite der Kassettengrundplatte KG sind Befestigungselemente BE angeordnet, in die in einem Teilbereich die Deckelverschlüsse DV eingeschnappt werden können; die aber auch zum Einsatz von Zusatzelementen dienen. In der Mitte der Kassettengrundplatte KG ist eine auch durch den Deckel D hindurchgehende Stapelöffnung vorgesehen, in die beispielsweise ein Stapeldorn geführt werden kann.

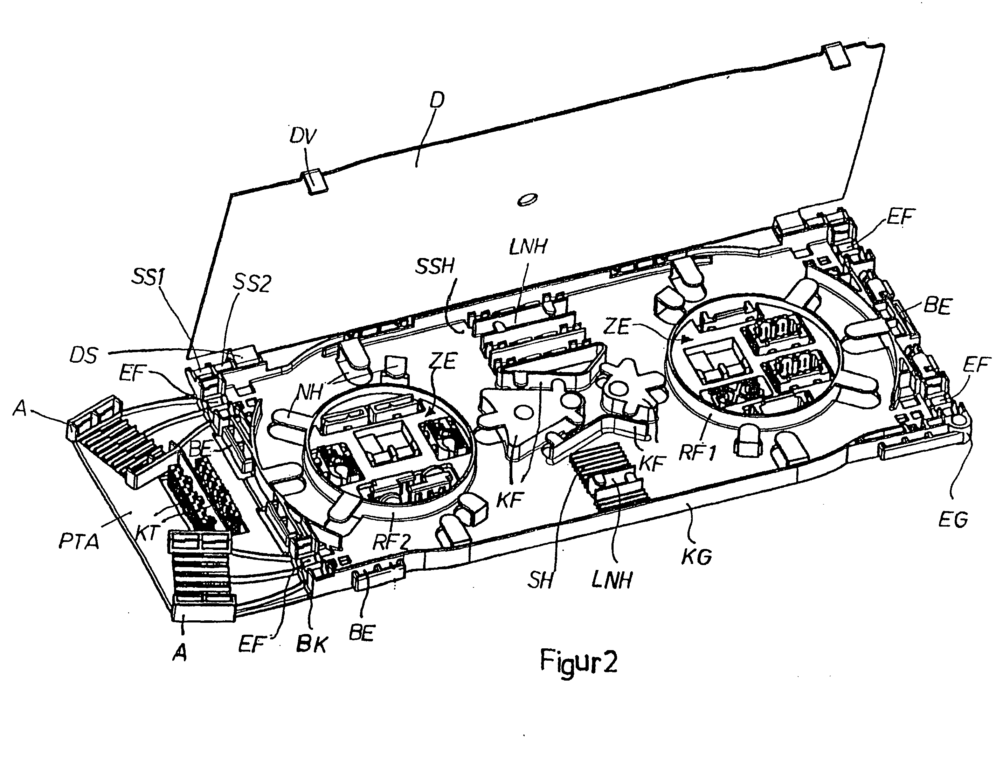

Figur 2 zeigt die Kassettengrundplatte KG im geöffneten Zustand, so daß die Lage der beiden kreisförmigen Führungselemente RF1 und RF2 mit den dazwischen liegenden kreuzförmigen Führungselementen KF erkennbar wird. Durch diese Führungselemente können die eingeführten Lichtwellenleiter auch 8-förmig geführt und abgelegt werden, so daß diese zu jeder Ein- bzw. Ausführung EF der Kassettengrundplatte KG geführt werden können. Die Schmalseite der Kassettengrundplatte KG ist hier mit einem Aufnahmeadapter PTA für die Einführung von Lichtwellenleitern mit Steckerabschlüssen, z.B. von sog. Pigtails, versehen. Die Stecker sind dann in den Aufnahmen A eingelegt und mit Klemmteilen KT, die ausbrechbar ebenfalls auf diesem Aufnahmeadapter PTA angeordnet sind, fixiert. In diesem Fall ist der Aufnahmeadapter PTA bereits über eine Bruchkante BK an der Kassettengrundplatte KG befestigt, kann aber durch Abknicken entlang dieser Bruchkante BK entfernt werden. Der Deckel ist mit einem Deckelscharnier DS an der Kassettengrundplatte KG klappbar befestigt. Weiterhin ist dargestellt, daß an den Führungselementen wie auch im übrigen Bereich der Kassettengrundplatte KG Niederhalter NH und LNH angeordnet sind, durch die ein Herausspringen der eingelegten Lichtwellenleiter verhindert wird.

Im mittleren Bereich der Kassettengrundplatte KG sind Spleißschutzhalter SH für verschiedene Spleißschutzarten, z.B. für die Aufnahme eines Schrumpfschlauchspleißes SSH, vorgesehen. Für die Längsführung von Lichtwellenleitern sind in diesem Bereich Niederhalter LNH mit in die Anordnung der Spleißschutzhalter SH bzw. SSH einbezogen. In einem Eckbereich der Kassettengrundplatte KG ist eine Bohrung für ein Eckgelenk EG angeordnet, in das eine Achse über mehrere Kassettengrundplatten hinweg eingesteckt werden kann, so daß ein Ausschwenken einer einzelnen Kassettengrundplatte KG aus dem Verbundblock ermöglicht wird.

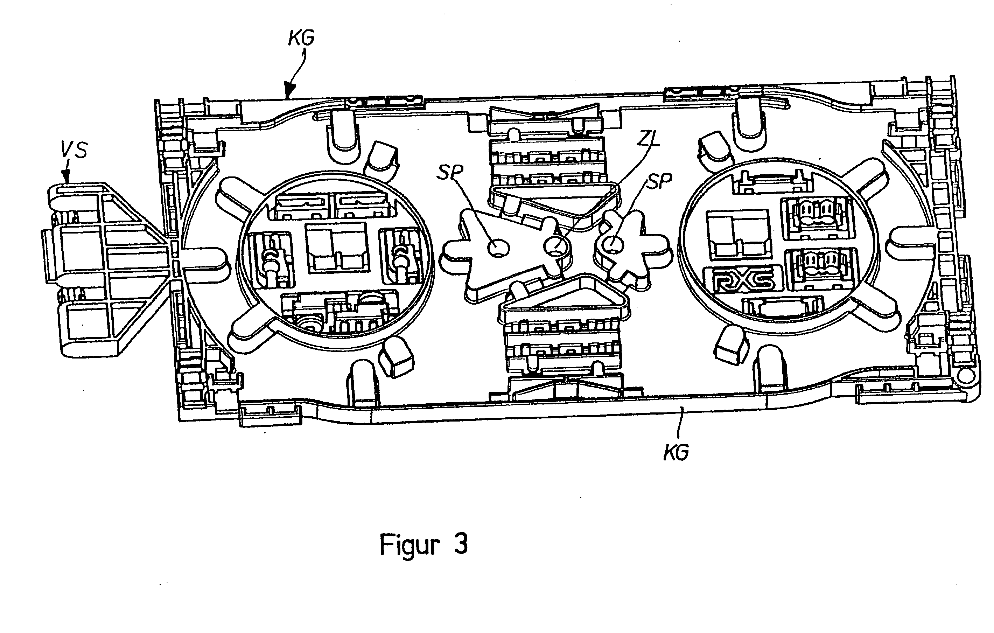

Figur 3 zeigt eine Kassettengrundplatte KG, an deren Schmalseite ein vertikales Schwenkelement VS angesetzt ist, mit dem die Kassettengrundplatte KG in einen speziellen Halter für solche Schwenkelemente eingerastet wird. Außerdem sind wiederum verschiedene Spleißschutzhalter angeordnet. Ein Zentralloch ZL deckt sich mit der Stapelöffnung im Deckel, der hier abgenommen ist. Schraubpunkte SP ermöglichen eine Befestigung mit Schrauben.

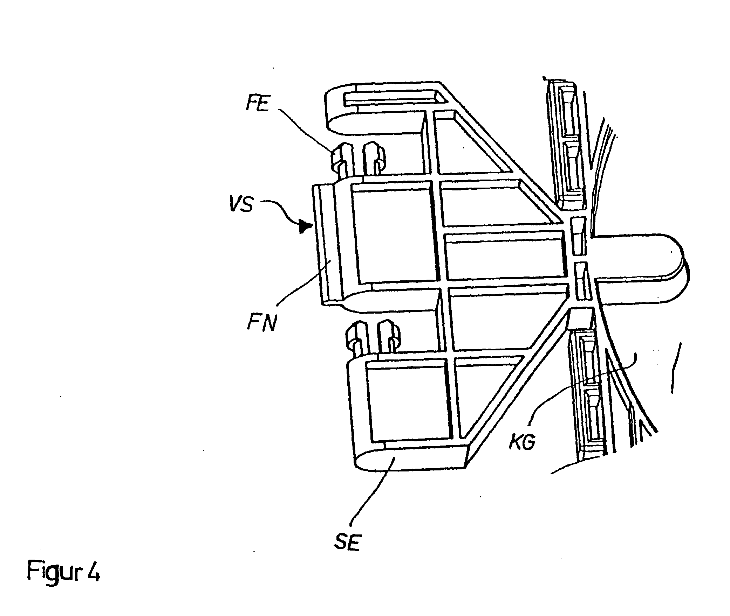

In Figur 4 wird ein vertikales Schwenkelement VS dargestellt, das an der Schmalseite der Kassettengrundplatte KG z.B. angeformt ist. Mit den Scharnierelementen SE wird dieses Schwenkelement VS in einen entsprechenden Halter eingesetzt, wobei eine federnde Einrastung mit Federelementen FE in Form von längsgeteilten Achsen erfolgt. Außerdem ist eine Fixiernase FN angeformt, mit der die vertikale Lage der Kassettengrundplatte KG fixiert werden kann.

Figur 5 zeigt den stufenförmigen Halter HVS für die vertikalen Schwenkelemente, wobei in jeder Stufe der Befestigungsanordnung SBA eine ineinander gehende Doppelbohrung DBO-DBU eingebracht ist. In diese Doppelbohrung DBO-DBU werden die Federelemente eines vertikalen Schwenkelementes eingerastet, wobei in Folge der Federwirkung ein Einrasten sowohl in der oberen Bohrung DBO wie auch in der unteren Bohrung DBU möglich ist. Dadurch können die Kassettengrundplatten KG übereinanderliegend seitlich abgeklappt werden, bis die gewünschte Kassettengrundplatte KG bzw. Kassette K erreicht ist. Die Fixierungen in der vertikalen Lage erfolgt durch den Eingriff der Fixiernase FN (s. Figur 4) in die Fixiernut NFN. Im senkrechten Versteifungsteil des Halters HVS ist eine Durchbruchsöffnung DF angeordnet, durch die ein Befestigungsband geführt werden kann. Mit einem Befestigungsansatz BA kann der Halter HVS im Gestell befestigt werden.

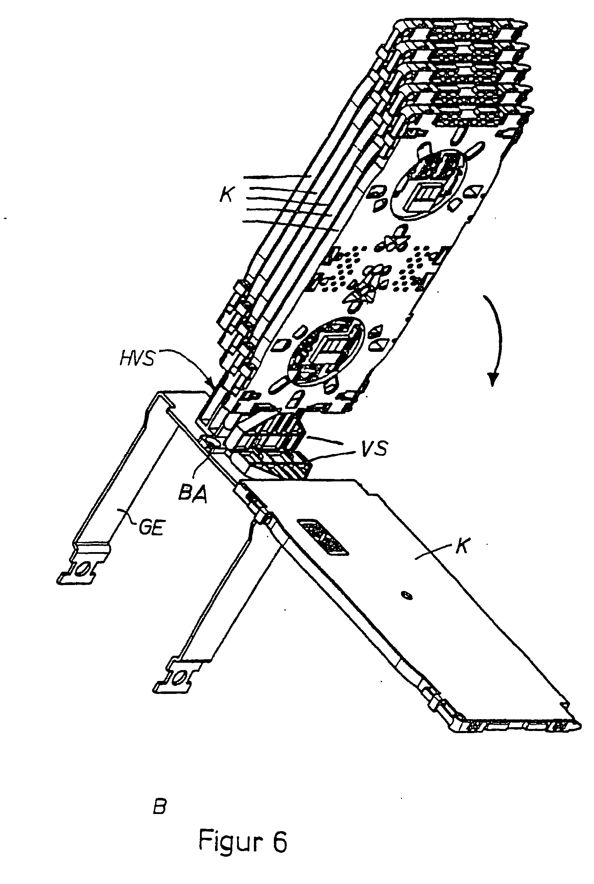

Figur 6 zeigt nun einen Verbund von Kassetten K, bestehend aus Kassettengrundplatte KG mit Schwenkelement und einem Dekkel, die vertikal mit deren vertikalen Schwenkelementen VS in dem Halter HVS gehalten werden. Eine dieser Kassetten K ist seitlich in waagerechte Position ausgeklappt worden, wie durch den Pfeil angedeutet wird. Mit dem Befestigungsansatz W BA ist die gesamte Anordnung auf einem Gestellelement GE befestigt.

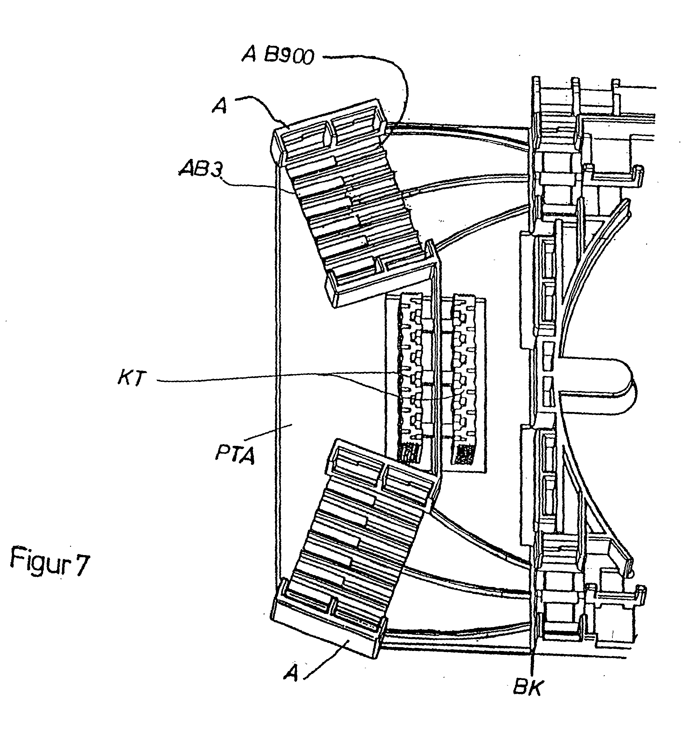

Aus Figur 7 wird deutlich, daß die Aufnahmen A des Aufnahmeadapters PTA für die Aufnahme von Lichtwellenleitern mit Steckern wie z.B. Pigtails zwei Aufnahmebereiche AB3 und AB900 aufweisen. Der Aufnahmebereich AB3 ist hier beispielsweise für die Aufnahme von Steckern mit 3 Millimeter Durchmesser und der Aufnahmebereich A900 für die Aufnahme von Steckern mit 900 Mikrometern Durchmesser ausgelegt, doch sind auch andere Maße möglich. Nach dem Einlegen der Stecker werden diese mit den Klemmteilen KT fixiert, wobei diese als Option ausbrechbar oder rastbar bereits auf dem Aufnahmeadapter PTA angeordnet sind. Über die Bruchkante BK kann der Aufnahmeadapter abgebrochen werden, wenn dieser nicht benutzt wird.

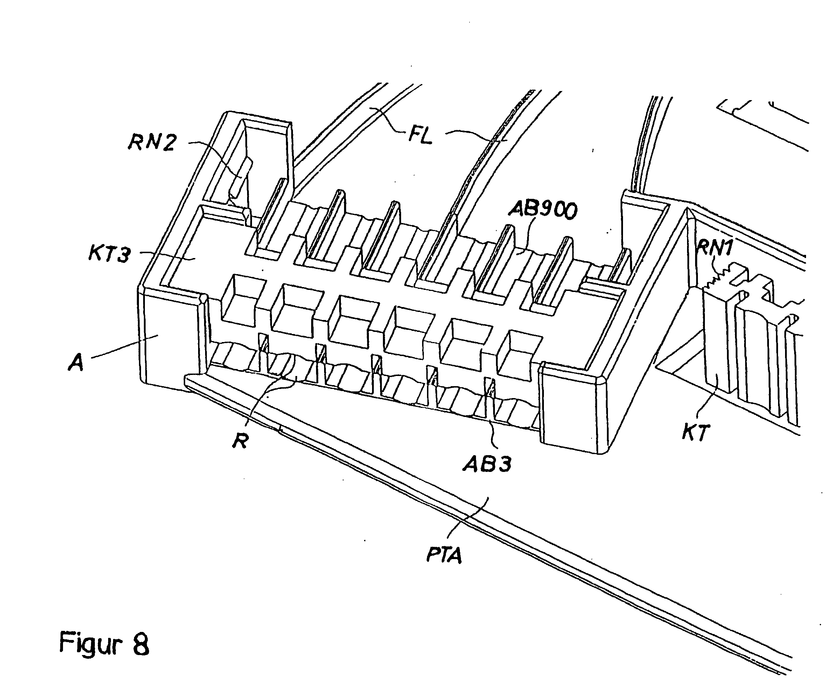

Die Figur 8 zeigt den Aufnahmebereich AB3, der mit einem angepaßten Klemmteil KT3 abgedeckt ist.

Durch seitliche Rastnasen RN2 in der Aufnahme A und durch korrespondierende Rastnasen RN1 an den Seiten der Klemmteile KT erfolgt die entsprechende rastende Klemmung der eingeführten Stecker. Die Radien R der Aufnahmebereiche sind ebenfalls an den Steckerdurchmesser angepaßt. Der hinten liegende Aufnahmebereich AB900 wird in diesem Fall nicht benutzt. Führungsleisten FL erleichtern die Einführung der Lichtwellenleiter in die Kassettengrundplatte.

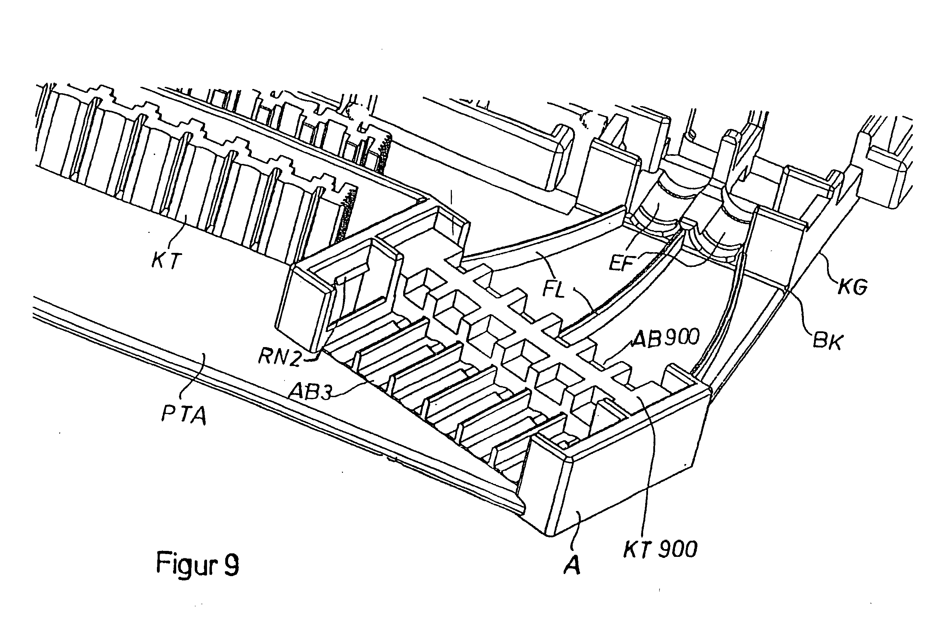

Figur 9 zeigt nun eine Einführung für Stecker im Aufnahmebereich AB900, wobei hierbei dann ein entsprechend angepaßtes Klemmteil KT900 eingesetzt ist. Auch hier wird die Führung der Lichtwellenleiter durch Führungsleisten FL bis zur Einführung EF der Kassettengrundplatte KG gezeigt.

Figur 10 zeigt den Mittelbereich der Kassettengrundplatte KG mit Spleißschutzhaltern SSH für Schrumpfschlauchspleiße, die mit Hilfe von federnden Klemmelementen KE fixiert wird. Darunter liegend sind die kreuzförmigen Führungselemente KF mit den Niederhaltern NH und eine zwischen den Spleißschutzhaltern SSH verlaufende Längsdurchführung für Lichtwellenleiter mit Niederhaltern LNH dargestellt.

Figur 11 zeigt den Mittelbereich der Kassettengrundplatte KG mit einem Spleißschutzhalter SHB für Lichtwellenleiterbändchen und eine Längsführung für Lichtwellenleiter mit Niederhaltern LNH.

Figur 12 zeigt die Kombination von verschiedenen Spleißschutzhaltern, z.B. Spleißschutzhalter SHF für sog. Fiberlok und Spleißschutzhalter SHK für Krimpspleiße. Dazwischen ist eine Längsführung für durchgehende Lichtwellenleiter mit Niederhaltern LNH eingefügt.

Figur 13 zeigt wiederum eine mögliche Kombination von Spleißschutzhaltern, hier Spleißschutzhalter SHF für Fiberlok und Spleißschutzhalter SSH für Schrumpfschlauchspleiße.

Figur 14 verdeutlicht, daß auch Fixiervorrichtungen für andere Lichtwellenleiterelemente vorgesehen werden können, wie z.B. eine Aufnahme AK für einen optischen Koppler. Eine Längsdurchführung mit Niederhaltern LNH ist entlang der Längsseite der Kassettengrundplatte KG geführt.

Figur 15 vermittelt den Bereich einer Einführung EF auf der Kassettengrundplatte KG, in der entsprechende Aufnahmen zur Anpassung an den einzuführenden Lichtwellenleitertyp eingesetzt werden können. In den Seitenwänden der Einführungen EF sind Rastnasen RN angeordnet, mit welchen die Aufnahmen verriegelt und fixiert werden. In den Öffnungen der Einführungen EF sind in den Radienbereichen z.B. Zahnreihen ZR vorhanden, die gegen Zugbeanspruchung in Achsrichtung wirken. Im Innenbereich der Einführungen EF sind Leisten bzw. Vorrichtungen KBB vorhanden, an denen Kabelbinder zur Fixierung von eingeführten Lichtwellenleitern befestigt werden können.

Figur 16 zeigt eine Aufnahme ABA für die Einführung von Bündeladern BA. Diese Aufnahme ABA wird in eine Einführung EF nach Figur 15 eingesetzt und seitlich verrastet. Nach Einführung der Bündelader BAD wird ein Klemmelement KBA aufgebracht, mit dem die Bündelader BAD fixiert wird.

Figur 17 zeigt den Innenraum eines kreisförmigen Führungselementes RF1, wobei die Begrenzungswandung einen Durchmesser aufweist, die dem minimal zulässigen Biegeradius für Lichtwellenleiter entspricht. Auf der Außenseite sind Niederhalter für die eingelegten Lichtwellenleiter angesetzt. In dem Innenraum dieses kreisförmigen Führungselementes RF1 sind nun Zusatzelemente ZE1 entnehmbar angeordnet, und zwar entweder eingerastet oder mit ausbrechbaren Stegen AST fixiert. Bei Bedarf können nun diese Zusatzelemente entnommen und für den entsprechenden Verwendungsfall eingesetzt werden. In diesem Innenraum sind beispielsweise zwei Aufnahmen ABA mit Zahn reihen ZT für Bündeladern und die dazugehörigen beiden Klemmelemente KBA fixiert. Außerdem befindet sich darin eine Aussparung ASB und ein Gegenlager KBEG für den Einsatz eines Befestigungselementes KBE (s. Figur 20). Hier wird das Befestigungselement KBE so eingerastet, daß es nach rückwärts durch die Kassettengrundplatte KG hindurchragt.

In Figur 18 ist eine weitere Aufnahme AEF dargestellt, die ebenfalls in eine Einführung EF eingesetzt werden kann. Sie beinhaltet einen Adapter AD für die Einführung von Einzelfasern oder Lichtwellenleiterbändchen, die durch Schlitze S eingeführt werden. Mit einem Deckel AEFD werden die Schlitze S nach oben abgeschlossen.

In Figur 19 wird erläutert, daß im Mittelbereich der Schmalseite der Kassettengrundplatte KG zusätzlich eine Öffnung für einen Kassettenübergang KU für Lichtwellenleiter angeordnet ist. Dieser Kassettenübergang KU ist auf der Schwenkseite der Kassettengrundplatte KG, so daß die ausgeführten Lichtwellenleiter im Stapelverbund mehrerer Kassettengrundplatten beim Klappen nicht beschädigt werden können. Die Lichtwellenleiter werden vorzugsweise in Aderschutzhüllen überführt, die an Rastnasen RNAS fixiert werden.

Figur 20 zeigt das zweite kreisförmige Führungselement RF2, in dem wieder als entnehmbare Zusatzelemente ZE2 verschiedene Einzelteile angeordnet sind. Hier sind beispielsweise Scharnierteile ST über Ausbruchstege AST angeordnet, die zum klappbaren Stapelaufbau mehrerer Kassettengrundplatten KG benötigt werden. Diese Scharnierteile ST werden mit ihren Öffnungen OSS auf die Scharnierachsen SS1 und SS2 (s. Figur 22) aufgeklippt. Auf jedem Scharnierteil ST ist ein Anschlag RNGL vorgesehen, der verhindert, daß eine aufgeklappte Kassettengrundplatte zu weit aufgeklappt wird. Außerdem befinden sich hier Kassettenbefestigungselemente KBE, mit denen die Kassettengrundplatte an Gestellteilen eingehängt und befestigt werden können. Hierzu werden die hinterschnittenen Rastelemente HRE in entsprechende Gegenrasterungen eingefügt. Schließlich sind Verschlußklemmen VK vorhanden, die in die äußeren Befestigungselemente BE der Kassettengrundplatten eingeklinkt werden, damit ein aus mehreren Kassettengrunplatten bestehender Stapel zu einer festen Einheit zusammengeklemmt werden kann.

Figur 21 zeigt nun einen Stapel von beispielsweise drei Kassettengrundplatten KG, die zusätzlich mit Aufnahmeadaptern PTA versehen sind. In die Befestigungselemente BE der Kassettengrundplatten KG sind die als Zusatzelemente mitgeführten Verschlußklammern VK eingeklinkt und die oberste Kassettengrundplatte KG ist mit einem Deckel D abgedeckt, dessen Verschluß DV ebenfalls in ein Befestigungselement BE eingreift. Damit läßt sich eine kompakte Einheit zusammenstellen, die z.B. in einem durchgehenden Eckgelenk EG drehbar gelagert werden kann.

Figur 22 vermittelt in einer Detaildarstellung die Anordnung der Scharnierteile ST, die in Richtung der Scharnierachsen SS1 bzw. SS2 der Kassettengrundplatte rastend aufgesetzt worden sind. Die seitlichen Rastnasen RNG der Kassettengrundplatten KG1, KG2 usw. gleiten beim Aufklappen der Kassettengrundplatten in Gegenlagern RNGL der Scharnierteile ST bis zum Anschlag.

In Figur 23 ist dargestellt, daß beispielsweise die Kassettengrundplatte KG2 um 90° aufgeklappt worden ist, wobei die Rastnasen RNG in Gegenlager RNGL bis zum Anschlag eingleiten.

In Figur 24 ist nochmals die gegenüberliegende Seite des Stapels von Kassettengrundplatten KG1, KG2 und KG3 gezeigt, woraus deutlich das wechselseitige Ineinandergreifen der Verschlußklammern VK in den Befestigungselementen BE zu erkennen ist. Dabei greift der Deckelverschluß in das Befestigungselement BE der obersten Kassettengrundplatte KG3 ein.

Die Figur 25 vermittelt den Einsatz eines Kassettenbefestigungselementes KBE, das an der äußeren Längsseite der Kassettengrundplatte KG in ein Befestigungselement BE eingehängt worden ist. Mit dem hinterschnittenen Knopf des Kassettenelementes KBE kann die Kassettengrundplatte KG in ein entsprechendes Gegenlager eines Gestells eingehängt werden.

Figur 26 zeigt, daß das Kassettenbefestigungselement KBE auch in einem Ausschnitt ASB im Bodenteil der Kassettengrundplatte KG eingerastet werden kann, wobei die Einrastung in dem Gegenlager KBEG für das Kassettenbefestigungselement KBE erfolgt.

Figur 27 vermittelt die Ausführung eines Deckels D für die Kassettengrundplatte, die mit Deckelscharnieren DS eingerastet wird. Die Gegenseite ist mit den Deckelverschlüssen DV versehen. In der mittleren Öffnung SO kann ein Dorn hindurchgeführt werden, auf den mehrere Kassettengrundplatten aufgestapelt werden können.

Figur 28 vermittelt in einer Detaildarstellung nochmals den stufenförmigen Halter HVS für die Aufnahme von vertikalen Schwenkelementen, die mit ihren Federelementen in die Doppelbohrungen DBO-DBU eingerastet werden. Außerdem sind querverlaufend Nuten NFN für den Einsatz der Fixiernasen FN der vertikalen Schwenkelemente vorgesehen, um die Kassettengrundplatten in vertikaler Position halten zu können.

## Patentansprüche

1. Kassette (K) zur Aufnahme von Lichtwellenleitern mit Überlängen und Lichtwellenleiterspleißverbindungen, wobei Rückhaltestege und kreisförmige Führungselemente (RF1, RF2) für die eingelegten Lichtwellenleiter und Spleißfixierungen für die Lichtwellenleiterspleiße auf einer Kassettengrundplatte (KG) angeordnet sind, mit zwei der Kasettengrundplatte (KG) zugeodneten, kreisförmigen Führungselementen (RF1, RF2), mit Spleißschutzhaltern (SH, SSH), mit Schwenkelementen (VS) für vertikales Schwenken der Kasette um eine Achse und mit Einführungsbereichen (EF) für die Einführung von Lichtwellenleitern,
**dadurch gekennzeichnet,**
**dass** zwischen den beiden kreisförmigen Führungselementen (RF1, RF2) ein Kreuzführungselement (KF) für die Lichtwellenleiterüberlängen angeordnet ist,
**dass** verschieden geformte Spleißschutzhalter (SH, SSH, SHB, SHF) zur Aufnahme verschiedener Ausführungsformen von Spleißschutzelementen angeordnet sind,
**dass** die Kasette zusätzlich zu dem Schwenkelement (VS) für vertikales Schwenken auch ein Schwenkelement (SS1, SS2, ST) für horizontales Schwenken der Kasette (K) bzw. der Kassettengrundplatte (KG) um eine Achse enthält, das bei Bedarf an seinem Ort der Verwendung an der Kassette angebracht werden kann, wobei die Kassette (K) bzw. die Kassettengrundplatte (KG) dann je nach verwendetem Schwenkelement entweder vertikal oder horizontal um eine Achse verschwenkt wird,
**dass** die Einführungsbereiche (EF) für die Einführung von Lichtwellenleitern und/oder Lichtwellenleiterbändchen und/oder Lichtwellenleitersteckern ausgerüstet sind, und dass Zusatzelemente (ZE : ABA, KBA, KBEG, ST, KBE, VK) wie sie zur Befestigung, Aufnahme oder Klemmung von Bündeladern, zur Befestigung, Klemmung oder Stapelung der Kassette, und / oder für die Schwenkelemente für die horizontale Schwenkung um eine Achse gebraucht werden zur Anpassung der Kassette (K) an den jeweiligen Verwendungszweck auf der Kassettengrundplatte (KG) herausnehmbar angeordnet sind und am Platz ihrer Verwendung an oder in der Kassette angeordnet werden können.

2. Kassette nach Anspruch 1,
**dadurch gekennzeichnet,**
**dass** die Kassettengrundplatte (KG) von zwei Schmalseiten und zwei Längsseiten begrenzt ist, und
**dass** ein vertikales Schwenkelement (VS) an einer Schmalseite der Kassettengrundplatte (KG) angeordnet ist.

3. Kassette nach Anspruch 1,
**dadurch gekennzeichnet,**
**dass** die Kassettengrundplatte (KG) von zwei Schmalseiten und zwei Längsseiten begrenzt ist, und
**dass** ein Aufnahmeadapter (PTA) für die Einführung von Lichtwellenleitern mit angesetzten Steckern an einer Schmalseite der Kassettengrundplatte (KG) angeordnet ist.

4. Kassette nach einem der vorhergehenden Ansprüche,
**dadurch gekennzeichnet,**
**dass** einem Deckel (D) für die Kassettengrundplatte (KG) eine mittlere Öffnung (SO) zugeordnet ist, und
**dass** die mittlere Öffnung (SO) zur Aufnahme eines Stapeldorns angeordnet ist, auf den mehrere Kassettengrundplatten aufstapelbar sind.

5. Kassette nach Anspruch 4,
**dadurch gekennzeichnet,**
**dass** der Deckel (D) entlang einer als Scharnierseite ausgebildeten Längsseite der Kassettengrundplatte (KG) schwenkbar angeordnet ist.

6. Kassette nach einem der vorhergehenden Ansprüche,
**dadurch gekennzeichnet,**
**dass** Scharnierachsen (SS1-SS2) entlang einer als Scharnierseite ausgebildeten Längsseite der Kassettengrundplatte (KG) angeordnet sind, und
**dass** die Scharnierachsen (SS1-SS2) eine horizontale Schwenkung bzw. eine Klappbarkeit der Kassette (K) bzw. Kassettengrundplatte (KG) um eine Achse ermöglichen.

7. Kassette nach Anspruch 6,
**dadurch gekennzeichnet,**
**dass** jeweils eine Scharnierachse (SS1-SS2) durch einen Steg in zwei Scharnierachsen (SS1, SS2) unterteilt ist, wobei auf die Scharnierachsen (SS1, SS2) Scharnierteile (ST) aufklippbar sind, die eine horizowtale Schwenkung der Kasette (K) bzw. Kasetten und platte (KG) ermöglichen.

8. Kassette nach einem der vorhergehenden Ansprüche,
**dadurch gekennzeichnet,**
**dass** ein Eckgelenk (EG) in mindestens einer Ecke zwischen einer Schmalseite und einer Längsseite der Kassettengrundplatte (KG) angeordnet ist.

9. Kassette nach einem der vorhergehenden Ansprüche,
**dadurch gekennzeichnet,**
**dass** Niederhalter (NH, LNH)an den kreisförmigen Führungselementen (RF1, RF2), an den Kreuzführungselementen (KF), an den seitlichen Wandungen der Kassettengrundplatte (KG) und auf dem Bodenteil der Kassettengrundplatte (KG) angeordnet sind, wobei die Niederhalter (NH, NHL) ein Herausspringen von Lichtwellenleitern verhindern.

10. Kassette nach einem der vorhergehenden Ansprüche,
**dadurch gekennzeichnet,**
**dass** auf der Kassettengrundplatte (KG) eine Aufnahme (AK) für Lichtwellenleiter-Koppler angeordnet ist.

11. Kassette nach einem der vorhergehenden Ansprüche,
**dadurch gekennzeichnet,**
**dass** Einführungen (EF) für Lichtwellenleiter an allen vier Eckbereichen zwischen jeweils einer Schmalseite und einer Längsseite der Kassettengrundplatte (KG) angeordnet sind.

12. Kassette nach einem der vorhergehenden Ansprüche,
**dadurch gekennzeichnet,**
**dass** die Zusatzelemente (ZE) für vielseitigen Einsatz, insbesondere für die Befestigung der Kassettengrundplatte (KG) und/oder für die klappbare Zusammenführung mehrerer übereinanderliegender Kassettengrundplatten (KG) auf der Kassettengrundplatte (KG) in eingerasteter oder ausbrechender Form angeordnet sind.

13. Kassette nach Anspruch 12,
**dadurch gekennzeichnet,**
**dass** die Zusatzelemente (ZE) im Innenraum der kreisförmigen Führungselemente (RF1, RF2) angeordnet sind.

14. Kassette nach einem der vorhergehenden Ansprüche,
**dadurch gekennzeichnet,**
**dass** Befestigungselemente (BE) in Ösenform zur vielseitigen Fixierung an Gestelleinheiten oder zum Einsatz von Verschluss- und Klemmteilen an einer äußeren Längsseite der Kassettengrundplatte (KG) angeordnet sind.

15. Kassette nach Anspruch 3,
**dadurch gekennzeichnet,**
**dass** der Aufnahmeadapter (PTA) in Einführungsrichtung hintereinanderliegende Aufnahmebereiche (AB3, AB900) zur Aufnahme von Steckern, insbesondere von Pigtails mit verschiedenen Durchmessern, aufweist.

16. Kassette nach Anspruch 15,
**dadurch gekennzeichnet,**
**dass** die Aufnahmebereiche (AB3, AB900) durch parallele Nuten gebildet sind, wobei die Nutendurchmesser den Durchmessern der Stecker entsprechen.

17. Kassette nach Anspruch 16,
**dadurch gekennzeichnet,**
**dass** jede Nut mindestens eine Abstufung von einem großen Durchmesser (AB3) vorzugsweise von 3 Millimetern, zu einem kleineren Durchmesser (AB900), vorzugsweise von 900 Mikrometern, aufweist.

18. Kassette nach einem der Ansprüche 15 bis 17,
**dadurch gekennzeichnet,**
**dass** angepasste Klemmteile (KT) zur Fixierung der Stecker in den Aufnahmebereichen (AB3, AB900) vorgesehen sind, wobei die Klemmteile (KT) auf dem Aufnahmeadapter angeordnet sind.

19. Kassette nach Anspruch 2,
**dadurch gekennzeichnet,**
**dass** das vertikale Schwenkelement (VS) mindestens ein Scharnierelement (SE) mit rastbaren Federelementen (FE) und eine Fixiernase (FN) zum Einsatz und zur Lagefixierung in einer Fixiernut (NFN) eines Halters (HVS) für vertikales Schwenken aufweist,
**dass** Halter (HVS) ineinander laufende Doppelbohrungen (DBO, DBU) zur Aufnahme der Federelemente (FE) aufweisen, wobei die Durchmesser und die Übergänge so bemessen sind, dass eine Verschiebung mit Rasterung der Federelemente (FE) möglich ist, und
**dass** die Doppelbohrungen (DBO, DBU) treppenförmig zur Aufnahme von Schwenkelementen mehrerer Kassettengrundplatten (KG) in einer stufenförmigen Befestigungsanordnung (SBA) angeordnet sind.

20. Kassette nach einem der vorhergehenden Ansprüche,
**dadurch gekennzeichnet,**
**dass** Abfangelemente für Zug- und Torsionskräfte vorzugsweise zumindest teilumlaufende Zahnreihen (ZR, ZT) und Kabelbinderbefestigungen (KBB) in den Einführungen (EF) angeordnet sind.

21. Kassette nach einem der vorhergehenden Ansprüche,
**dadurch gekennzeichnet,**
**dass** Aufnahmen (ABA) mit einem deckenden Klemmelement (KBA) für Bündeladern (BAD) in den Einführungen (EF) einsetzbar sind, und
**dass** die Aufnahmen (ABA) und die zugehörigen Klemmelemente (KBA) im Innenraum eines kreisförmigen Führungselements (RF1, RF2) für die Entnahme rastbar oder ausbrechbar als allgemein genannte Zusatzelemente (ZE) angeordnet sind.

22. Kassette nach einem der Ansprüche 1 bis 21,
**dadurch gekennzeichnet,**
**dass** Aufnahmen (AEF) mit deckenden Klemmelementen (AEFD) als allgemein genannte Zusatzelemente (ZE) in den Einführungen (EF) einsetzbar sind,
**dass** eine derartige Aufnahme (AEF) einen Adapter (AD) für die Einführung von Einzelfasern oder Lichtwellenleiter-Bändchen beinhaltet, und
**dass** längsverlaufende Schlitze (S) in den Adapter (AD) zur Durchführung von Einzeladern oder Lichtwellenleiter-Bändchen eingearbeitet sind.

23. Kassette nach einem der vorhergehenden Ansprüche,
**dadurch gekennzeichnet,**
**dass** mindestens eine Kassettenübergangsöffnung (KU) in einem Mittelbereich der Kassettengrundplatte (KG) tangential ausgeführt ist, und
**dass** in den Kassettenübergangsöffnungen (KU) Kassettennasen (RNAS) für eingeführte Aderschutzhüllen angeordnet sind.

24. Kassette nach einem der vorhergehenden Ansprüche,
**dadurch gekennzeichnet,**
**dass** Kassettenbefestigungselemente (KBE) und Gegenlager (KBEG) als allgemein genannte Zusatzelemente (ZE2) im Innenraum eines kreisförmigen Führungselements (RF2) für die Entnahme rastbar oder ausbrechbar angeordnet sind,
**dass** jedes Kassettenbefestigungselement (KBE) ein hinterschnittenes Rastelement (HRE) aufweist, und
**dass** die Kassettenbefestigungselemente (KBE) in Befestigungselementen (BE) an den Schmalseiten oder in Aussparungen (AS) des Bodenbereichs der Kassettengrundplatte (KB) einsetzbar sind.

25. Kassette nach einem der vorhergehenden Ansprüche,
**dadurch gekennzeichnet,**
**dass** Scharnierteile (ST) und Verschlussklammern (VK) als allgemein genannte Zusatzelemente (ZE2) im Innenraum eines kreisförmigen Führungselements (RF2) für die Entnahme rastbar oder ausbrechbar angeordnet sind,
**dass** die Scharnierteile (ST) auf die Scharnierachsen (SS1, SS2) der Kassettengrundplatte (KG) zum Aufbau von klappbaren Kassettenstapeln für die Aufnahme der jeweils folgenden Kassettengrundplatte (KG) aufklippbar sind, so dass eine horizontale Schwenkung der Kasette möglich ist.
**dass** die Scharnierteile Rastnasengegenlager (RNGL) als Anschläge für Rastnasen (RNG) der Kassettengrundplatte (KG) aufweisen, und
**dass** Verschlussklammern (VK)zum gegenseitigen Verschluss der gestapelten Kassettengrundplatte (KG) in den seitlichen Befestigungselementen (BE) der Kassettengrundplatten (KG) einrastbar sind.

## Claims

1. Cassette (K) for accommodating optical waveguides with excess lengths and optical waveguide splices, restraining webs and circular guide elements (RF1, RF2) for the optical waveguides introduced and splice fixing means for the optical waveguide splices being arranged on a cassette base plate (KG), having two circular guide elements (RF1, RF2) assigned to the cassette base plate (KG), having splice-protection holders (SH, SSH), having pivoting elements (VS) for vertical pivoting of the cassette about an axis, and having inlet regions (EF) for the introduction of optical waveguides, **characterized in that** a cross-form guide element (KF) for the optical-waveguide excess lengths is arranged between the two circular guide elements (RF1, RF2), **in that** differently formed splice-protection holders (SH, SSH, SHB, SHF) are provided for accommodating different embodiments of splice-protection elements, **in that**, in addition to the pivoting element (VS) for vertical pivoting, the cassette also contains a pivoting element (SS1, SS2, ST) which is intended for horizontal pivoting of the cassette (K) and/or of the cassette base plate (KG) about an axis and can be fitted on the cassette if required at its use location, the cassette (K) and/or the cassette base plate (KG) being pivoted either vertically or horizontally about an axis, depending on the pivoting element used, **in that** the inlet regions (EF) are equipped for the introduction of optical waveguides and/or optical waveguide strips and/or optical waveguide connectors, and **in that** additional elements (ZE, ABA, KBA, KBEG, ST, KBE, VK), as are used for fastening, accommodating or clamping bundle tubes, for fastening, clamping or stacking the cassette, and/or for the pivoting elements for horizontal pivoting about an axis, are arranged in a removable manner on the cassette base plate (KG), for adaptation of the cassette (K) to the respective use purpose, and can be arranged on or in the cassette at their use location.

2. Cassette according to Claim 1, **characterized in that** the cassette base plate (KG) is bounded by two narrow sides and two longitudinal sides, and **in that** a vertical pivoting element (VS) is arranged on one narrow side of the cassette base plate (KG).

3. Cassette according to Claim 1, **characterized in that** the cassette base plate (KG) is bounded by two narrow sides and two longitudinal sides, and **in that** an accommodating adapter (PTA) for the introduction of optical waveguides with connectors attached is arranged on one narrow side of the cassette base plate (KG).

4. Cassette according to one of the preceding claims, **characterized in that** a cover (D) for the cassette base plate (KG) is assigned a central opening (SO), and **in that** the central opening (SO) is provided for accommodating a stacking mandrel, on which a plurality of cassette base plates can be stacked.

5. Cassette according to Claim 4, **characterized in that** the cover (D) is arranged such that it can be pivoted along a longitudinal side of the cassette base plate (KG) which is designed as a hinge side.

6. Cassette according to one of the preceding claims, **characterized in that** hinge pins (SS1-SS2) are arranged along a longitudinal side of the cassette base plate (KG) which is designed as a hinge side, and **in that** the hinge pins (SS1-SS2) make it possible for the cassette (K) and/or cassette base plate (KG) to be pivoted horizontally and/or capable of swing action.

7. Cassette according to Claim 6, **characterized in that** in each case one hinge pin (SS1-SS2) is subdivided into two hinge pins (SS1-SS2) by a web, it being possible to clip onto the hinge pins (SS1, SS2) hinge parts which make it possible for the cassette (K) and/or cassette base plate (KG) to be pivoted horizontally.

8. Cassette according to one of the preceding claims, **characterized in that** a corner articulation (EG) is arranged in at least one corner between a narrow side and a longitudinal side of the cassette base plate (KG).

9. Cassette according to one of the preceding claims, **characterized in that** holding-down means (NH, LNH) are arranged on the circular guide elements (RF1, RF2), on the cross-form guide elements (KF), on the lateral walls of the cassette base plate (KG) and on the base part of the cassette base plate (KG), the holding-down means (NH, NHL) preventing the optical waveguides from springing out.

10. Cassette according to one of the preceding claims, **characterized in that** a mount (AK) for optical waveguide couplers is arranged on the cassette base plate (KG).

11. Cassette according to one of the preceding claims, **characterized in that** inlet ports (EF) for optical waveguides are arranged at all four corner regions between in each case one narrow side and one longitudinal side of the cassette base plate (KG).

12. Cassette according to one of the preceding claims, **characterized in that** the additional elements (ZE) are arranged on the cassette base plate (KG), such that they can be latched in or broken out, for versatile usage, in particular for fastening the cassette base plate (KG) and/or for joining together for swing action a plurality of cassette base plates (KG) located one above the other.

13. Cassette according to Claim 12, **characterized in that** the additional elements (ZE) are arranged in the interior of the circular guide elements (RF1, RF2).

14. Cassette according to one of the preceding claims, **characterized in that** fastening elements (BE) in eyelet form are arranged on an outer longitudinal side of the cassette base plate (KG) for versatile fixing on framework units or for the insertion of closure and clamping parts.

15. Cassette according to Claim 3, **characterized in that** the accommodating adapter (PTA) has accommodating regions (AB3, AB900) which are located one behind the other in the direction of introduction and are intended for accommodating connectors, in particular pigtails of different diameters.

16. Cassette according to Claim 15, **characterized in that** the accommodating regions (AB3, AB900) are formed by parallel grooves, the groove diameters corresponding to the diameters of the connectors.

17. Cassette according to Claim 16, **characterized in that** each groove has at least one stepped formation from a large diameter (AB3), preferably of 3 millimetres, to a smaller diameter (AB900), preferably of 900 micrometres.

18. Cassette according to one of Claims 15 to 17, **characterized in that** adapted clamping parts (KT) are provided for fixing the connectors in the accommodating regions (AB3, AB900), the clamping parts (KT) being arranged on the accommodating adapter.

19. Cassette according to Claim 2, **characterized in that** the vertical pivoting element (VS) has at least one hinge element (SE) with latchable resilient elements (FE) and a fixing nose (FN) for inserting it into, and fixing it in position in, a fixing groove (NFN) of a holder (HVS) for vertical pivoting, **in that** the holder (HVS) has double bores (DBO, DBU) which run into one another and are intended for accommodating the resilient elements (FE), the diameters and the transitions being dimensioned such that displacement with latching of the resilient elements (FE) is possible, and **in that** the double bores (DBO, DBU) are arranged in staircase form in a step-like fastening arrangement (SBA) in order to accommodate pivoting elements of a plurality of cassette base plates (KG).

20. Cassette according to one of the preceding claims, **characterized in that** cable-tie fastenings (KBB) and rows of teeth (ZR, ZT), which preferably at least partially encircle elements for absorbing tensile and torsional forces, are arranged in the inlet ports (EF).

21. Cassette according to one of the preceding claims, **characterized in that** mounts (ABA) with a covering clamping element (KBA) for bundle tubes (BAD) can be inserted into the inlet ports (EF), and **in that** the mounts (ABA) and the associated clamping elements (KBA) are arranged, as generally termed additional elements (ZE), in the interior of a circular guide element (RF1, RF2) such that they can be latched or broken out for removal.

22. Cassette according to one of Claims 1 to 21, **characterized in that** mounts (AEF) with covering clamping elements (AEFD) can be inserted, as generally termed additional elements (ZE), into the inlet ports (EF), **in that** such a mount (AEF) contains an adapter (AD) for the introduction of individual fibres or optical waveguide strips, and **in that** longitudinally running slits (S) are made in the adapter (AD) for the through-passage of individual fibres or optical waveguide strips.

23. Cassette according to one of the preceding claims, **characterized in that** at least one cassette-transition opening (KU) is configured tangentially in a central region of the cassette base plate (KG), and **in that** cassette noses (RNAS) for buffer tubes introduced are arranged in the cassette-transition openings (KU).

24. Cassette according to one of the preceding claims, **characterized in that** cassette-fastening elements (KBE) and supports (KBEG) are arranged, as generally termed additional elements (ZE2), in the interior of a circular guide element (RF2) such that they can be latched or broken off for removal, **in that** each cassette-fastening element (KBE) has an undercut latching element (HRE), and **in that** the cassette-fastening elements (KBE) can be inserted in fastening elements (BE) on the narrow sides, or in cutouts (AS) of the base region, of the cassette base plate (KB).

25. Cassette according to one of the preceding claims, **characterized in that** hinge parts (ST) and closure clips (VK) are arranged, as generally termed additional elements (ZE2), in the interior of a circular guide element (RF2) such that they can be latched or broken off for removal, **in that** the hinge parts (ST) can be clipped onto the hinge pins (SS1, SS2) of the cassette base plate (KG) for the construction of swing-action cassette stacks, for accommodating the respectively following cassette base plate (KG), so that horizontal pivoting of the cassette is possible, **in that** the hinge parts have latching-nose supports (RNGL) as stops for latching noses (RNG) of the cassette base plate (KG), and **in that** closure clips (VK), for reciprocal closure of the stacked cassette base plate (KG), can be latched in the lateral fastening elements (BE) of the cassette base plates (KG).

## Revendications

1. Cassette (K) pour recevoir des fibres optiques ayant des surlongueurs et des liaisons épissurées pour fibres optiques, des nervures de retenue et des éléments de guidage circulaires (RF1, RF2) pour les fibres optiques introduites ainsi que des fixations d'épissure pour les épissures des fibres optiques étant disposés sur une plaque de base de cassette (KG), comprenant deux éléments de guidage circulaires (RF1, RF2) associés à la plaque de base de cassette (KG), des supports de protection d'épissure (SH, SSH), des éléments pivotants (VS) pour le pivotement vertical de la cassette autour d'un axe et des zones d'introduction (EF) pour l'introduction des fibres optiques, **caractérisée en ce qu'**un élément de guidage en croix (KF) pour les surlongueurs des fibres optiques est disposé entre les deux éléments de guidage circulaires (RF1, RF2), que des supports de protection d'épissure (SH, SSH, SHB, SHF) de différentes formes sont arrangés pour recevoir différentes formes de réalisation des éléments de protection d'épissure, que la cassette, en plus de l'élément pivotant (VS) pour le pivotement vertical, comprend également un élément pivotant (SS1, SS2, ST) pour un pivotement horizontal de la cassette (K) ou de la plaque de base de cassette (KG) autour d'un axe, lequel peut être monté en cas de besoin sur la cassette sur son lieu d'utilisation, la cassette (K) ou la plaque de base de cassette (KG) étant alors pivotée soit verticalement, soit horizontalement autour d'un axe en fonction de l'élément pivotant utilisé, que les zones d'introduction (EF) sont équipées pour l'introduction de fibres optiques et/ou de nappes de fibres optiques et/ou de fiches pour fibres optiques et que des éléments supplémentaires (ZE : ABA, KBA, KBEG, ST, KBE, VK), tels qu'ils sont utilisés pour la fixation, le logement ou encore le serrage des fils en bottes, pour la fixation, le serrage ou l'empilage de la cassette et/ou pour les éléments pivotants pour le pivotement horizontal autour d'un axe afin d'adapter la cassette (K) à l'application correspondante, sont disposés de manière amovible sur la plaque de base de cassette (KG) et peuvent être disposés sur ou dans la cassette sur son lieu d'utilisation.

2. Cassette selon la revendication 1, **caractérisée en ce que** la plaque de base de cassette (KG) est délimitée par deux côtés étroits et deux côtés longs et qu'un élément pivotant vertical (VS) est disposé sur un côté étroit de la plaque de base de cassette (KG).

3. Cassette selon la revendication 1, **caractérisée en ce que** la plaque de base de cassette (KG) est délimitée par deux côtés étroits et deux côtés longs et qu'un adaptateur d'accueil (PTA) est disposé sur un côté étroit de la plaque de base de cassette (KG) pour l'introduction de fibres optiques sur lesquelles sont montées des fiches.

4. Cassette selon l'une des revendications précédentes, **caractérisée en ce qu'**une ouverture centrale (SO) est associée à un couvercle (D) pour la plaque de base de cassette (KG) et que l'ouverture centrale (SO) est disposée de manière à recevoir un goujon d'empilage sur lequel peuvent être empilées plusieurs plaques de base de cassette.

5. Cassette selon la revendication 4, **caractérisée en ce que** le couvercle (D) est disposé de manière pivotante le long d'un côté long réalisé sous la forme d'un côté charnière de la plaque de base de cassette (KG).

6. Cassette selon l'une des revendications précédentes, **caractérisée en ce que** des axes de charnière (SS1-SS2) sont disposés le long d'un côté long réalisé sous la forme d'un côté charnière de la plaque de base de cassette (KG) et que les axes de charnière (SS2-SS2) permettent un pivotement horizontal ou un rabattage de la cassette (K) ou de la plaque de base de cassette (KG).

7. Cassette selon la revendication 6, **caractérisée en ce qu'**un axe de charnière (SS1-SS2) est à chaque fois divisé en deux axes de charnière (SS1, SS2) par une nervure, des parties de charnière (ST) qui permettent un pivotement horizontal de la cassette (K) ou de la plaque de base de cassette (KG) pouvant être enclipsées sur les axes de charnière (SS1, SS2).

8. Cassette selon l'une des revendications précédentes, **caractérisée en ce qu'**une articulation de coin (EG) est disposée dans au moins un coin entre un côté étroit et un côté long de la plaque de base de cassette (KG).

9. Cassette selon l'une des revendications précédentes, **caractérisée en ce que** des serre-flans (NH, LNH) sont disposés sur les éléments de guidage circulaires (RF1, RF2), sur les éléments de guidage en croix (KF), sur les parois latérales de la plaque de base de cassette (KG) et sur le fond de la plaque de base de cassette (KG), les serre-flans (NH, NHL) empêchant que les fibres optiques ne soient éjectées à l'extérieur.

10. Cassette selon l'une des revendications précédentes, **caractérisée en ce qu'**un logement (AK) pour des coupleurs de fibre optique est disposé sur la plaque de base de cassette (KG).

11. Cassette selon l'une des revendications précédentes, **caractérisée en ce que** des introductions (EF) pour fibres optiques sont disposées dans les quatre zones de coin à chaque fois entre un côté étroit et un côté long de la plaque de base de cassette (KG).

12. Cassette selon l'une des revendications précédentes, **caractérisée en ce que** les éléments supplémentaires (ZE) destinés à un usage polyvalent sont disposés sur la plaque de base de cassette (KG) sous une forme enclenchée ou sous une forme détachable, notamment pour la fixation de la plaque de base de cassette (KG) et/ou pour l'assemblage rabattable de plusieurs plaques de base de cassette (KG) superposées.

13. Cassette selon la revendication 12, **caractérisée en ce que** les éléments supplémentaires (ZE) sont disposés dans l'espace intérieur des éléments de guidage circulaires (RF1, RF2).

14. Cassette selon l'une des revendications précédentes, **caractérisée en ce que** des éléments de fixation (BE) en forme d'oeillets destinés à la fixation polyvalente sur des bâtis ou destinés à l'utilisation de pièces de fermeture et de serrage sont disposés sur un côté long extérieur de la plaque de base de cassette (KG).

15. Cassette selon la revendication 3, **caractérisée en ce que** l'adaptateur d'accueil (PTA) présente des zones d'accueil (AB3, AB900) disposées l'une derrière l'autre dans le sens de l'introduction pour recevoir des fiches, notamment des épissures de diamètres différents.

16. Cassette selon la revendication 15, **caractérisée en ce que** les zones d'accueil (AB3, AB900) sont formées par des rainures parallèles, le diamètre des rainures correspondant aux diamètres des fiches.

17. Cassette selon la revendication 16, **caractérisée en ce que** chaque rainure présente au moins un échelonnement d'un grand diamètre (AB3) de préférence de 3 millimètres vers un diamètre plus petit (AB900), de préférence de 900 micromètres.

18. Cassette selon l'une des revendications 15 à 17, **caractérisée en ce que** sont prévues des pièces de serrage adaptées (KT) pour la fixation des fiches dans les zones d'accueil (AB3, AB900), les pièces de serrage (KT) étant disposées sur l'adaptateur d'accueil.

19. Cassette selon la revendication 2, **caractérisée en ce que** l'élément pivotant vertical (VS) présente au moins un élément charnière (SE) muni d'éléments ressorts enclenchables (FE) et d'un tenon de fixation (FN) pour la fixation et le positionnement dans une rainure de fixation (NFN) d'un support (HVS) pour le pivotement vertical, que les supports (HVS) présentent des doubles ouvertures (DBO, DBU) qui pénètrent les unes dans les autres pour recevoir les éléments ressorts (FE), le diamètre et les transitions étant dimensionnés de manière à permettre un coulissement avec enclenchement des éléments ressorts (FE), et que les doubles ouvertures (DBO, DBU) sont disposées en paliers pour recevoir les éléments pivotants de plusieurs plaques de base de cassette (KG) dans un arrangement de fixation à gradins (SBA).

20. Cassette selon l'une des revendications précédentes, **caractérisée en ce que** des éléments d'absorption des forces de traction et de torsion, de préférence des rangées de dents (ZR, ZT) au moins sur une partie du pourtour et des fixations pour attache-câbles (KBB) sont disposés dans les introductions (EF).

21. Cassette selon l'une des revendications précédentes, **caractérisée en ce que** des logements (ABA) munis d'un élément de serrage couvrant (KBA) pour des fils en bottes (BA) peuvent être insérés dans les introductions (EF) et que les logements (ABA) et les éléments de serrage (KBA) correspondants sont disposés dans l'espace intérieur d'un élément de guidage circulaire (RF1, RF2) pour l'enlèvement des éléments supplémentaires (ZE) enclenchables ou détachables, qualifiés de généraux.

22. Cassette selon l'une des revendications 1 à 21, **caractérisée en ce que** des logements (AEF) munis d'éléments de serrage couvrants (AEFD) faisant office d'éléments supplémentaires (ZE) qualifiés de généraux peuvent être insérés dans les introductions (EF), qu'un logement (AEF) de ce type comprend un adaptateur (AD) pour l'introduction de fibres individuelles ou de nappes de fibres optiques, et que des fentes longitudinales (S) sont façonnées dans l'adaptateur (AD) pour le passage des fils individuels ou des nappes de fibres optiques.

23. Cassette selon l'une des revendications précédentes, **caractérisée en ce qu'**au moins une ouverture de transition de cassette (KU) est réalisée de manière tangentielle dans une zone centrale de la plaque de base de cassette (KG) et que des tenons de cassette (RNAS) destinés à recevoir des manchons de protection pour fils qui y sont introduits sont disposés dans les ouvertures de transition de cassette (KU).

24. Cassette selon l'une des revendications précédentes, **caractérisée en ce que** des éléments de fixation de cassette (KBE) et des contre-paliers (KBEG) sont disposés de manière enclenchable ou détachable pour l'enlèvement sous la forme d'éléments supplémentaires (ZE2) qualifiés de généraux dans l'espace intérieur d'un élément de guidage circulaire (RF2), que chaque élément de fixation de cassette (KBE) présente un élément d'enclenchement à contre-dépouille (HRE), et que les éléments de fixation de cassette (KBE) peuvent être insérés dans des éléments de fixation (BE) sur les côtés étroits ou dans des creux (AS) de la zone du fond de la plaque de base de cassette (KB).

25. Cassette selon l'une des revendications précédentes, **caractérisée en ce que** des parties de charnière (ST) et des pinces de fermeture (VK) sont disposées de manière enclenchable ou détachable pour l'enlèvement sous la forme d'éléments supplémentaires (ZE2) qualifiés de généraux dans l'espace intérieur d'un élément de guidage circulaire (RF2), que les parties de charnière (ST) peuvent être enclipsées sur les axes de charnière (SS1, SS2) de la plaque de base de cassette (KG) en vue de constituer des piles de cassettes rabattables pour recevoir à chaque fois la plaque de base de cassette (KG) suivante de manière à permettre un pivotement horizontal de la cassette, que les parties de charnière présentent des contre-paliers pour tenon d'enclenchement (RNGL) faisant office de butées pour les tenons d'enclenchement (RNG) de la plaque de base de cassette (KG), et que les pinces de fermeture (VK) destinées à la fermeture mutuelle de la plaque de base de cassette (KG) empilée peuvent s'enclencher dans les éléments de fixation latéraux (BE) des plaques de base de cassette (KG).
